(19) Europäisches Patentamt
European Patent Office
Office européen des brevets

(11) EP 2 924 480 A1

(12) EUROPEAN PATENT APPLICATION
published in accordance with Art. 153(4) EPC

(43) Date of publication:
30.09.2015 Bulletin 2015/40

(51) Int Cl.:
G02B 6/04 (2006.01)　　　G02B 6/02 (2006.01)
G02B 6/42 (2006.01)　　　G02B 6/44 (2006.01)

(21) Application number: 13857008.0

(22) Date of filing: 20.11.2013

(86) International application number:
PCT/JP2013/081309

(87) International publication number:
WO 2014/080953 (30.05.2014 Gazette 2014/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.11.2012 JP 2012257023
26.11.2012 US 201261729748 P

(71) Applicant: Sumitomo Electric Industries, Ltd.
Osaka-shi, Osaka 541-0041 (JP)

(72) Inventor: HAYASHI Tetsuya
Yokohama-shi
Kanagawa 244-8588 (JP)

(74) Representative: Hoffmann Eitle
Patent- und Rechtsanwälte PartmbB
Arabellastraße 30
81925 München (DE)

(54) OPTICAL WAVEGUIDE, OPTICAL FIBER CABLE, AND OPTICAL MODULE

(57) The present invention relates to an optical fiber comprising a plurality of cores, a cladding, and the like. The optical waveguide has a combination of adjacent cores with the same structure, and as an example, the adjacent cores with the same structure are arranged so that a first angle between a first intercore line segment connecting centers of the adjacent cores and an easy bend direction becomes less than 30 degrees.

Fig.1A

Fig.1B

EP 2 924 480 A1

**Description**

**Technical Field**

The present invention relates to an optical waveguide, an optical fiber cable, and an optical module, and specifically the optical waveguide includes a multi-core optical fiber (which will be referred to hereinafter referred as "optical fiber"), and a multi-core optical waveguide (which will be referred hereinafter simply as "optical waveguide").

**Background Art**

The optical fibers and optical waveguides having a plurality of cores in a common cladding are required to have smaller intercore (core-to-core) crosstalk and a larger core density (the number of cores per fiber cross-sectional area). The intercore crosstalk increases as the core pitch becomes smaller or as phases become matched closer between cores (i.e., as the effective refractive-index difference between cores becomes smaller). In the case of the homogeneous optical fibers or in the case of the heterogeneous optical fibers with a bend of not more than a certain bending radius, phase matching occurs between cores because of the bend and twist and, for this reason, the crosstalk cannot be reduced unless the core pitch is made larger. In the case of the heterogeneous optical fibers, core structures need to be made significantly different between heterogeneous cores, in order to prevent occurrence of the phase matching due to the bend and twist even in small bending radii. The known related technologies include Patent Literature 1 and Non-Patent Literature 1 listed below.

**Citation List**

**Patent Literatures**

[Patent Literature 1]: International Publication WO 2012/064579

**Non-Patent Literatures**

[Non-Patent Literature 1]: Proc. of SPIE, 2012, vol. 8284, p.8240I-1 to I-8

**Summary of Invention**

**Technical Problem**

The Inventor has conducted investigation on the aforementioned conventional technologies and found the problem as described below. Specifically, with the conventional optical fibers, it is difficult to further improve the core density (or to further decrease the core pitch) while keeping the intercore crosstalk low. The optical fiber cables internally having the optical fibers also have the same problem.

The present invention has been accomplished in order to solve the above-described problem and it is an object of the present invention to provide an optical fiber with a structure for improving the core density while keeping the intercore crosstalk low, an optical fiber cable including the optical fiber, an optical waveguide, and an optical module.

**Solution to Problem**

An optical waveguide according to the present invention comprises: a plurality of cores; a cladding covering each of the plurality of cores; a first surface on which one end surfaces of the plurality of cores are arranged; and a second surface on which the other end surfaces of the plurality of cores are arranged, and then each of the plurality of cores extends along a predetermined axis direction from the first surface to the second surface. In this structure, the plurality of cores include a first core combination of two adjacent cores. In a section or over an entire length of the optical waveguide, the first core combination has an easy bend direction along a specific direction in a cross section orthogonal to the predetermined axis direction or is bent along the specific direction. The two adjacent cores belonging to the first core combination have the same core structure. Furthermore, the two adjacent cores are arranged so that a first angle between a first intercore line segment connecting centers of said two adjacent cores and the specific direction becomes less than 30 degrees. The cladding may have a lower refractive index than the core, but the optical fiber (multi-core optical fiber) may be applied to a photonic band-gap fiber (PBGF). That is, the refractive index of the cladding is not limited to a lower refractive index than the cores. The plurality of cores and the cladding are composed of silica glass.

An optical fiber according to the present invention, as a first aspect, comprises: one or more claddings each of which covers a plurality of cores extending in a predetermined direction (fiber longitudinal direction) and has a lower refractive index than the plurality of cores; and a coating covering each of the claddings. In this first aspect, a two-dimensional figure defined by a region occupied by the coating on a cross section of the optical fiber perpendicular to the predetermined direction has rotational symmetry of order two or less, and the optical fiber with the coating in such a cross-sectional structure has a structure easier to bend in a specific bending direction (easy bend direction) on the cross section than in the other directions. Namely, the cross-sectional structure of the optical fiber is not of circular symmetry and has rotational symmetry of order one or two but not rotational symmetry of order three or more, on the cross section perpendicular to the predetermined direction, whereby the optical fiber becomes easier to bend uniquely only in the easy bend direction on the cross section perpendicular to the predetermined direction. On the cross section of the optical fiber, each of the claddings has one or more first core combinations satisfying a first angle condition that an acute angle of a first intercore line segment connecting centers of two adjacent cores, with respect to the easy bend direction is less than 30°. Furthermore, in every one of the first core combinations satisfying the first angle condition, two adjacent cores have an identical structure.

As a second aspect applicable to the above first aspect, preferably, the first angle condition is that the acute angle between the first intercore line segment and the easy bend direction is less than 5°. As a third aspect applicable to at least either one of the first and second aspects, at least any one of the claddings may further have a second core combination satisfying a second angle condition that a second intercore line segment connecting centers of two adjacent cores intersects at a right angle or at an acute angle of not less than 30° with the easy bend direction, on the cross section of the optical fiber. In this third aspect, two adjacent cores may have different structures in the second core combination satisfying the second angle condition.

As a fourth aspect applicable to at least any one of the above first to third aspects, at least any one of the claddings may further have a third core combination satisfying a third angle condition that a third intercore line segment connecting centers of two cores with an identical structure intersects at a right angle or at an acute angle of not less than 30° with the easy bend direction, on the cross section of the optical fiber. In this fourth aspect, preferably, in the cladding having at least the first core combination and the third core combination, a minimum length of the third intercore line segment in the third core combination is larger than a maximum length of the first intercore line segment in the first core combination.

As a fifth aspect applicable to at least any one of the above first to fourth aspects, preferably, the coating is comprised of one of resin, metal, and carbon. As a sixth aspect applicable to at least any one of the above first to fifth aspects, preferably, when a cross section of the coating is defined as a region surrounded by an outer periphery of the coating on the cross section of the optical fiber, the cross section of the coating has rotational symmetry of order two or less and has a shape such that a thickness or an outer periphery size in its length of the coating along the easy bend direction is the shortest. Namely, in this sixth aspect, the coating preferably has the cross-sectional shape which is not of circular symmetry, which has rotational symmetry of order one or two but not rotational symmetry of order three or more, on the cross section perpendicular to the predetermined direction (fiber longitudinal direction), and in which the easy bend direction is a direction in which the coating diameter is the shortest. As a seventh aspect applicable to at least any one of the above first to sixth aspects, preferably, when cross sections of the respective claddings are defined as regions surrounded by outer peripheries of the claddings on the cross section of the optical fiber, the cross section of at least any one of the claddings has a shape which has rotational symmetry of order two or less and in which a cladding diameter along the easy bend direction is the shortest. Namely, in this seventh aspect, preferably, any one of the claddings is not of circular symmetry and has rotational symmetry of order one or two but not rotational symmetry of order three or more, on the cross section perpendicular to the predetermined direction (fiber longitudinal direction), and the easy bend direction is the direction in which the cladding diameter is the shortest. When considering an outer periphery of the coating as a diagram on a cross section orthogonal to a longitudinal direction of the optical fiber, the wording "outer periphery size in its length" of the coating of the optical fiber means an interval between the two point where the straight line passing through a gravity center of the diagram and the outer periphery of the diagram intersect. The "outer periphery size" can change by changing an angle of the straight line with respect to the diagram. In a diagram with a complex outer peripheral shape, when there are three points or more where the straight line passing through the gravity center of the diagram and the outer periphery of the diagram intersect, an interval between the farthest two points is defined as an outer periphery size. Here, the gravity center means a gravity center of the diagram and does not means a gravity center of the optical fiber on a cross section orthogonal to the longitudinal direction of the optical fiber (namely, a material density of the optical fiber is not considered in such a definition of gravity center).

As an eighth aspect applicable to at least any one of the above first to seventh aspects, preferably, when cross sections of the respective claddings are defined as regions surrounded by outer peripheries of the claddings on the cross section of the optical fiber, the cross section of at least any one of the claddings has rotational symmetry of order two or less, and on the cross section of the optical fiber, the claddings are arrayed in a direction perpendicular to the easy bend direction. Namely, in this eighth aspect, any one of the claddings is not of circular symmetry or, the arrangement of the claddings is not of circular symmetry and has rotational symmetry of order one or two but not rotational symmetry of order three or more, on the cross section perpendicular to the predetermined direction (fiber longitudinal direction). When the claddings are arrayed along the direction perpendicular to the easy bend direction, the easy bend direction is defined as a direction perpendicular to a straight line on which the sum of lengths of portions included in the claddings is the largest. In other words, the easy bend direction is a direction in which a width of a region inside a closed curve enclosing all the claddings so as to minimize a circumferential length on the cross section perpendicular to the predetermined direction (fiber longitudinal direction) is the smallest.

As a ninth aspect applicable to at least any one of the above first to eighth aspects, the optical fiber may comprise one or more bend direction controllers (for example, additional rigid members) extending along the predetermined direction (fiber longitudinal direction) in the coating and having a higher Young's modulus than the coating. On the other hand, as a tenth aspect applicable to at least any one of the above first to eighth aspects, each of the claddings and the coating may be comprised of an identical resin material. In this case, the optical fiber may comprise one or more bend direction controllers extending along the predetermined direction (fiber longitudinal direction) in a resin region in which each of the claddings and the coating are integrated, and having a higher Young's modulus than the identical resin material.

As an eleventh aspect applicable to the above ninth or tenth aspect, preferably, the bend direction controllers are arrayed in a direction perpendicular to the easy bend direction on the cross section of the optical fiber. Furthermore, as a twelfth aspect applicable to the ninth aspect, each of the bend direction controllers may have the Young's modulus equal to or higher than that of each of the claddings, and the bend direction controllers and the claddings may be arrayed in a direction perpendicular to the easy bend direction.

Furthermore, as a thirteenth aspect, an optical fiber cable according to the present invention is an optical fiber cable internally comprising the optical fiber having the structure as described above (the optical fiber according to the present invention). In this optical fiber cable, the optical fiber is held in the cable in a state in which the optical fiber is bent throughout an entire length thereof. As a fourteenth aspect applicable to the thirteenth aspect, preferably, the optical fiber is bent in a bending radius in the range of 10 cm to 10 m throughout the entire length thereof.

As a fifteenth aspect, an optical waveguide (multi-core optical waveguide) according to the present invention comprises a plurality of cores, and a cladding covering the plurality of cores. In the optical waveguide, the cladding has a first entrance/exit face in which one end faces of the respective cores are arranged, and a second entrance/exit face in which the other end faces of the respective cores are arranged. Each of the plurality of cores has: a first straight portion having a central axis extending straight and including the one end face, a second straight portion having a central axis extending straight and including the other end face, and a curved portion located between the first straight portion and the second straight portion and having a central axis curved in a radius of curvature of not more than 15 mm. In each of the plurality of cores, an angle between the central axis of the first straight portion and the central axis of the second straight portion is not less than 58°. Particularly, in this fifteenth aspect, on a cross section of the cladding being perpendicular to the central axes of the respective cores and including the curved portions of the cores, there is one or more first core combinations satisfying a first angle condition that an acute angle of a first intercore line segment connecting centers of two adjacent cores, with respect to a direction coincident with the radius of curvature is less than 30°. In this case, in every one of the first core combinations satisfying the first angle condition, two adjacent cores have an identical structure.

As a sixteenth aspect applicable to the above fifteenth aspect, preferably, in the curved portion in each of the plurality of cores, the central axis thereof is curved in the radius of curvature of not more than 10 mm. As a seventeenth aspect applicable to the above fifteenth aspect, preferably, in the curved portion in each of the plurality of cores, the central axis thereof is curved in the radius of curvature of not more than 7.5 mm. As an eighteenth aspect applicable to the above fifteenth aspect, preferably, in the curved portion in each of the plurality of cores, the central axis thereof is curved in the radius of curvature of not more than 5 mm. Furthermore, as a nineteenth aspect applicable to the above fifteenth aspect, preferably, the first angle condition is that the acute angle between the first intercore line segment and the direction coincident with the radius of curvature is less than 5°.

As a twentieth aspect applicable to at least any one of the above fifteenth to nineteenth aspects, there may be further a second core combination satisfying a second angle condition that a second intercore line segment connecting centers of two adjacent cores intersects at a right angle or at an acute angle of not less than 30° with the direction coincident with the radius of curvature, on the cross section of the cladding, and in the second core combination satisfying the second angle condition, two adjacent cores may have different structures. As a twenty first aspect applicable to at least any one of the above fifteenth to twentieth aspects, there may be further a third core combination satisfying a third angle condition that a third intercore line segment connecting centers of two cores with an identical structure intersects at a right angle or at an acute angle of not less than 30° with the direction coincident with the radius of curvature, on the cross section of the cladding,. In this case, preferably, on the cross section of the cladding in which there are at least the first core combination and the third core combination, a minimum length of the third intercore line segment in the third core combination is larger than a maximum length of the first intercore line segment in the first core combination.

As a twenty-first aspect, it is preferable that an optical module according to the present invention has a structure that the optical waveguide as set forth in any one of the above fifteenth to twentieth aspects and an optoelectronic component with optical input/output terminals are integrated. In this case, the one end surfaces of the plurality of cores arranged on the first surface are optically coupled with the optical input/output terminals of the optoelectronic component.

**Advantageous Effect of Invention**

As described above, the optical fibers, optical fiber cables, optical waveguides, and optical modules according to the present embodiment have achieved the improvement in core pitch while keeping the intercore crosstalk low.

Brief Description of Drawings

Figs. 1A and 1B are graphs showing examples of relationships between crosstalk and bending radius;
Figs. 2A to 2F are drawings illustrating equivalent refractive indices with a bend of an optical fiber;
Fig. 3 is a cross-sectional view of optical fiber 1 according to the first embodiment;
Fig. 4 is a cross-sectional view of optical fiber 2 according to the second embodiment;
Fig. 5 is a cross-sectional view of optical fiber 3 according to the third embodiment;
Fig. 6 is a cross-sectional view of optical fiber 4 according to the fourth embodiment;
Fig. 7 is a cross-sectional view of optical fiber 5 according to the fifth embodiment;
Fig. 8 is a cross-sectional view of optical fiber 6A according to a modification example;
Fig. 9 is a cross-sectional view of optical fiber 6B according to a modification example;
Fig. 10 is a cross-sectional view of optical fiber 6C according to a modification example;
Fig. 11 is a cross-sectional view of optical fiber 6D according to a modification example;
Fig. 12 is a cross-sectional view of optical fiber 7A according to a modification example;
Fig. 13 is a cross-sectional view of optical fiber 7B according to a modification example;
Fig. 14 is a cross-sectional view of optical fiber 7C according to a modification example;
Fig. 15 is a cross-sectional view of optical fiber 8A according to a modification example;
Fig. 16 is a cross-sectional view of optical fiber 8B according to a modification example;
Fig. 17 is a cross-sectional view of optical fiber 8C according to a modification example;
Fig. 18 is a cross-sectional view of optical fiber 8D according to a modification example;
Fig. 19 is a drawing showing a configuration of a transmission link realizing an optical transceiver by a silicon photonics chip;
Fig. 20 is a perspective view showing a configuration of optical waveguide 220 according to an embodiment of the present invention;
Fig. 21 is a drawing showing one end face of the optical waveguide 220 according to the embodiment;
Fig. 22 is a cross-sectional view (a cross-section along the line I-I of Fig. 20) of the optical waveguide 220 according to the embodiment;
Fig. 23 is a cross-sectional view (a cross-section along the line I-I of Fig. 20) of the optical waveguide 220 according to the embodiment;
Fig. 24 is graphs showing relationships between the core pitch and the crosstalk coefficient at the wavelength of 1.31 $\mu$m in the fiber bending radius of 5 cm;
Fig. 25 is graphs showing relationships between the core pitch and the crosstalk coefficient at the wavelength of 1.55 $\mu$m in the fiber bending radius of 80 cm; and
Fig. 26A is a cross-sectional view of optical fiber cable 9 according to the present embodiment, and Fig. 26B is a perspective view of grooved spacer 92 therein.

**Description of Embodiments**

Embodiments of the present invention will be described below in detail with reference to the accompanying drawings. Identical or similar elements will be denoted by the same reference signs in the description of the drawings, without redundant description.

First described is the relationship between statistical average of intercore crosstalk (which will be referred to hereinafter simply as "crosstalk") and bending radius in the optical fibers. As the power coupling coefficient between cores becomes larger, the intercore crosstalk increases. The power coupling coefficient between cores is dependent on a size of an overlap between electric field distributions of respective cores and on a level of phase matching between cores. Namely, the power coupling coefficient between cores increases and the intercore crosstalk increases with increase in size of the overlap between electric field distributions of respective cores and with increase in level of the phase matching between cores.

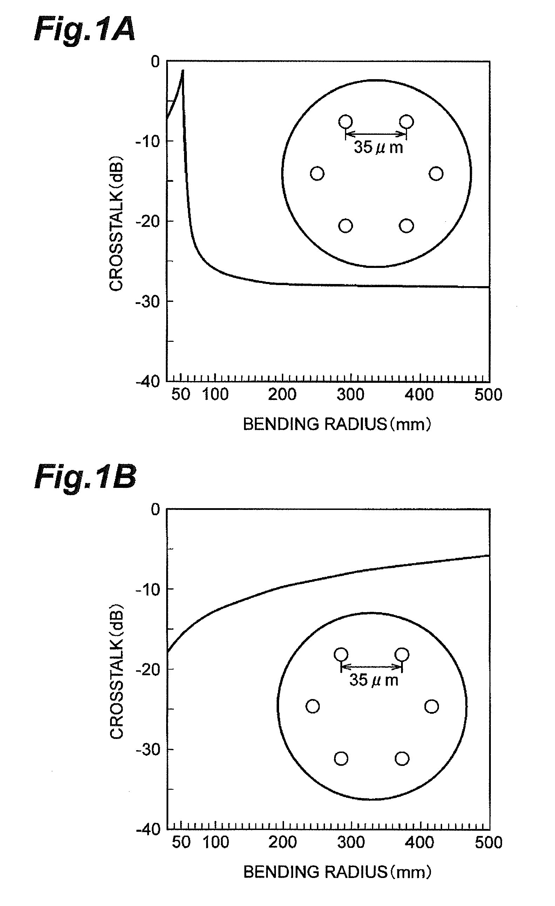

Figs. 1A and 1B are graphs showing examples of the relationship between crosstalk and bending radius. Particularly, Fig. 1A shows the relationship in a situation in which structures of two adjacent cores are different from each other and Fig. 1B the relationship in a situation in which structures of two adjacent cores are equal to each other. The wording "structure of core" means a refractive index profile of core. The source of Figs. 1A and 1B is Non-Patent Literature 2 ("K. Saito et al., "Homogeneous and Heterogeneous Multi-core fibers," IEEE Summer Topicals 2012, TuC4.4.").

Between heterogeneous cores, as shown in Fig. 1A, the crosstalk suddenly increases at a certain bending radius with decrease in bending radius, and then the crosstalk gradually decreases with further decrease in bending radius. The threshold bending radius at the sudden change of the crosstalk between heterogeneous cores is denoted by $R_{pk}$ (cf. Non-Patent Literature 3 ("T. Hayashi et al., "Crosstalk variation of multi-core fibre due to fibre bend," ECOC2010, We.8.F.6")). On the other hand, between homogeneous cores, as shown in Fig. 1B, the crosstalk monotonically decreases with decrease in bending radius. The crosstalk can be reduced more in the wide range of bending radius in the case between heterogeneous cores. For sufficiently decreasing the threshold bending radius $R_{pk}$ so as to avoid occurrence of degradation of crosstalk in practical use of the optical fiber, however, it is necessary to make the structural difference between cores different enough to affect transmission characteristics.

The reason why the crosstalk of optical fiber behaves as shown in Figs. 1A and 1B is that the optical fiber is twisted at random or with intention around the longitudinal axis. This will be discussed using the drawings. With bending of the optical fiber, bending radii of respective cores become slightly different, resulting in slight change of optical path lengths of the respective cores. This change of optical path lengths is equivalently represented by change in refractive index in a linear optical fiber. This changed refractive index will be referred to as equivalent refractive index.

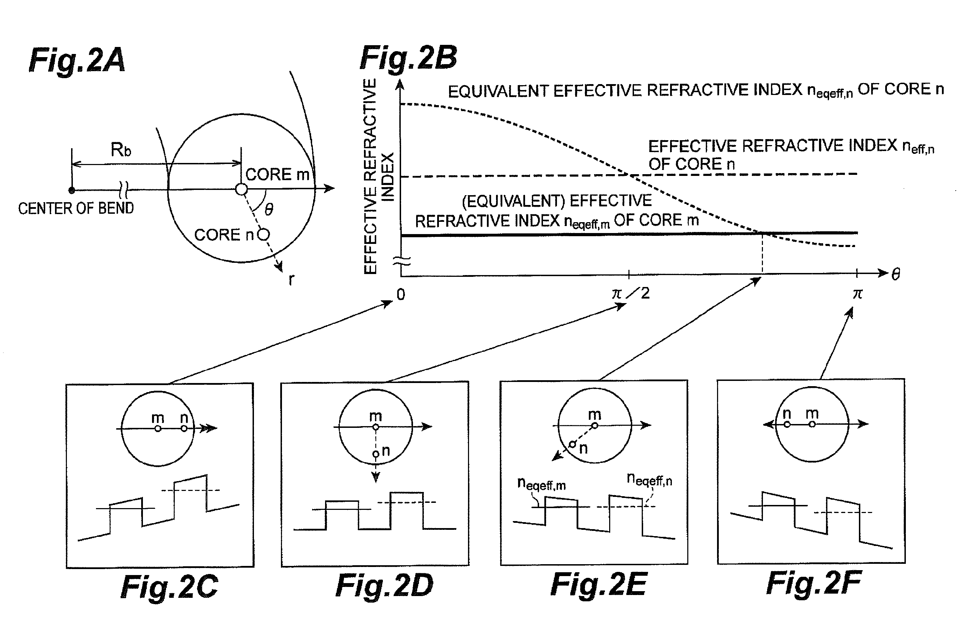

Figs. 2A to 2F are drawings illustrating the equivalent refractive indices with the optical fiber being bent. Particularly, Fig. 2A is a drawing for describing definitions of respective parameters. Fig. 2B is a graph showing the relationship between angle $\theta$ (radian) and effective refractive index. Figs. 2C to 2F show refractive index profiles at $\theta=0$, $\theta=\pi/2$, $\theta=3\pi/4$, and $\theta=\pi$. The equivalent effective refractive index $n_{eqeff, m}$ of core m at the center is constant. In contrast to it, the equivalent effective refractive index $n_{eqeff, n}$ of core n separated by distance $D_{nm}$ from core m is expressed by Expression (1) below, using the actual effective refractive index $n_{eff, n}$, bending radius $R_b$, and polar coordinate position $(r_n, \theta_n)$ of core n on a cross section of fiber. As shown in Figs. 2C to 2F, even if the actual effective refractive indices of the cores are different from each other, the equivalent effective refractive indices of the cores can be equal to each other depending upon the bend and twist. This occurs when the bending radius $R_b$ is expressed by Expression (2) below. Since a match of phases between cores can be expressed in other words that the equivalent effective refractive indices of the cores become equal to each other (or extremely close to each other), the phase matching between heterogeneous cores becomes greater in such small bending radii, resulting in increase of crosstalk.

[Math 1]

$$n_{eqeff,n} = n_{eff,n}\left(1 + \frac{r_n \cos\theta_n}{R_b}\right) \qquad \cdots (1)$$

[Math 2]

$$R_b \le R_{pk} = D_{nm}\frac{(n_{eff,m} + n_{eff,n})/2}{\left|n_{eff,m} - n_{eff,n}\right|} \qquad \cdots (2)$$

Since between homogeneous cores the phases between the cores are always matched at $\theta=\pm\pi/2$ in any bending radius, the crosstalk is less likely to decrease than in the case between heterogeneous cores. In the situation between homogeneous cores, however, the difference between actual effective refractive index and equivalent effective refractive index becomes larger with decrease in bending radius, so as to decrease the "amount" of phase matching (i.e., to reduce chances of the equivalent effective refractive indices of the cores becoming extremely close); therefore, the crosstalk gradually decreases.

Embodiments of the present invention concern optical fibers in structures wherein a core constellation on a cross section of optical fiber is less likely to be twisted against bending, and optical fiber cables internally having them. The embodiments of the present invention are resistant to twisting and thus the phase matching between cores due to twisting is less likely to occur, thereby realizing lower crosstalk and a higher core density (shorter core pitch) than before.

The optical fiber of each embodiment described below is an optical fiber in which a plurality of cores extending in a fiber longitudinal direction are covered by a cladding and the cladding is coated with resin, wherein a structure on a cross section perpendicular to the fiber longitudinal direction is not of circular symmetry and has rotational symmetry of order 1 or 2 but not rotational symmetry of three or more, whereby the optical fiber is more likely to bend uniquely only in a specific direction (easy bend direction) on the cross section perpendicular to the fiber longitudinal axis (that is, the easy bend direction is likely to be uniquely a bending radius direction). Furthermore, the optical fiber according to each embodiment has one or more combinations (first core combinations) satisfying a first angle condition that an acute angle of a line segment (first intercore line segment) connecting centers of two adjacent cores, with respect to the easy bend direction on the cross section perpendicular to the fiber longitudinal direction is less than 30°, and in every one of the combinations satisfying the first angle condition, structures of two adjacent cores are identical. The wording "structures of two adjacent cores are identical, homogeneous, or equal" means that $R_{pk}$ in the above Expression (2) is 50 cm or more, regarding the relationship between the two adjacent cores, and the wording "structures of two adjacent cores are heterogeneous or different" means that $R_{pk}$ in the above Expression (2) is less than 50 cm, regarding the relationship between the two adjacent cores.

For easier explanation, the embodiments will be described while a core group is defined as a collection of a series of cores among which structures of two adjacent cores are identical, because the collection is a combination in which an acute angle of a line segment connecting centers of two adjacent cores, with respect to the easy bend direction on the cross section perpendicular to the fiber longitudinal axis is less than 30°. With consideration to situations in which small deviation is made between the easy bend direction and the bending radius direction, more preferred conditions are as follows for two cores with which the acute angle of the line segment connecting the centers of two adjacent cores, with respect to the easy bend direction is less than 30°: the acute angle of the line segment connecting the centers of two adjacent cores, with respect to the easy bend direction is more preferably less than 15°; the acute angle of the line segment connecting the centers of two adjacent cores, with respect to the easy bend direction is still more preferably less than 5°; the line segment connecting the centers of two adjacent cores is furthermore preferably parallel to the easy bend direction.

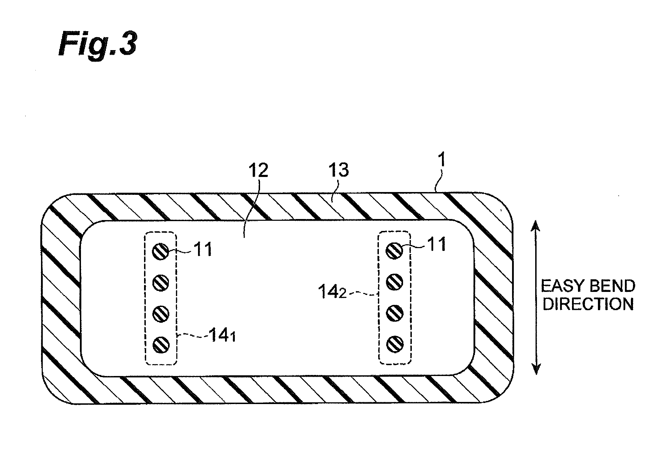

Fig. 3 is a cross-sectional view of optical fiber 1 according to the first embodiment. The optical fiber 1 includes a bared fiber which is composed of silica glass and comprises eight cores 11, and a cladding 12 covering each of these cores 11. The cladding 12 is covered by a coating (resin) 13. The shape of the coating on the cross section of the optical fiber 1 is approximately a rectangular shape and the easy bend direction in which the coating diameter and cladding diameter are the shortest is the vertical direction in the same drawing. The optical fiber 1 is provided with a core group $14_1$ consisting of four cores 11 and a core group $14_2$ consisting of the other four cores 11. The adjacent cores 11 in one core group have an identical structure and, as described above, the acute angle of the line segment connecting the centers thereof, with respect to the easy bend direction on the cross section perpendicular to the fiber longitudinal axis is less than 30°. The cores 11 in each of the core groups $14_1$ and $14_2$ are arrayed on the same axis in the easy bend direction.

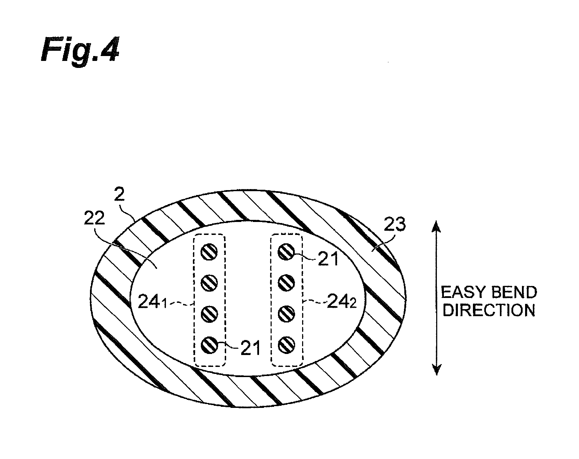

Fig. 4 is a cross-sectional view of optical fiber 2 according to the second embodiment. In the optical fiber 2, eight cores 21 are covered by a cladding 22 and the cladding 22 is covered by a coating (resin) 23. The shape of the coating on the cross section of the optical fiber 2 is approximately an elliptical shape and the easy bend direction in which the coating diameter and cladding diameter are the shortest is the vertical direction in the same drawing. The optical fiber 2 is provided with a core group $24_1$ consisting of four cores 21 and a core group $24_2$ consisting of the other four cores 21. The four cores 21 in each of the core groups $24_1$ and $24_2$ are arrayed on the same axis in the easy bend direction. As described above, each of the core groups $24_1$ and $24_2$ is composed of only the cores 21 of an identical structure.

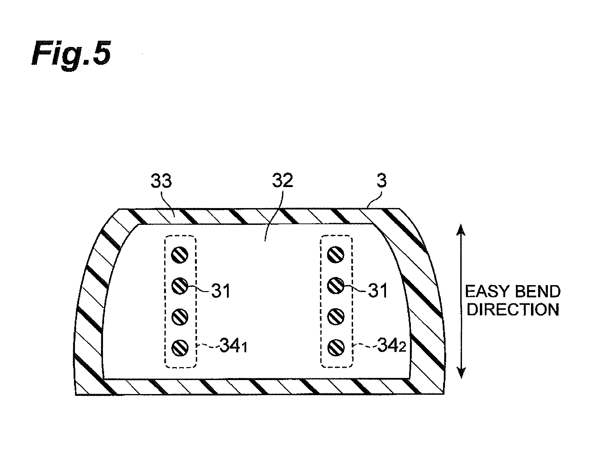

Fig. 5 is a cross-sectional view of optical fiber 3 according to the third embodiment. In the optical fiber 3, eight cores 31 are covered by a cladding 32 and the cladding 32 is covered by a coating (resin) 33. In the shape of the coating on the cross section of the optical fiber 3, the easy bend direction in which the coating diameter and cladding diameter are the shortest is the vertical direction in the same drawing. The optical fiber 3 is provided with a core group $34_1$ consisting of four cores 31 and a core group $34_2$ consisting of the other four cores 31. The four cores 31 in each of the core groups $34_1$ and $34_2$ are arrayed on the same axis in the easy bend direction. As described above, each of the core groups $34_1$ and $34_2$ is composed of only the cores 31 of an identical structure.

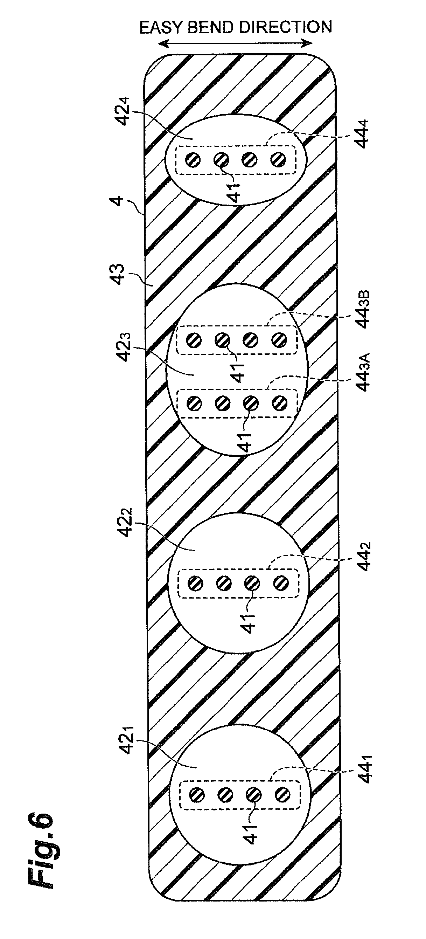

Fig. 6 is a cross-sectional view of optical fiber 4 according to the fourth embodiment. In the optical fiber 4, four cores 41 are covered by a cladding (cladding element) $42_1$, four cores 41 by a cladding (cladding element) $42_2$, eight cores 41 by a cladding (cladding element) $42_3$, four cores 41 by a cladding (cladding element) $42_4$, and these four claddings $42_1$ to $42_4$ by a coating (resin) 43. The shape of the coating on the cross section of the optical fiber 4 is approximately a rectangular shape. The easy bend direction is a direction in which the coating diameter is the shortest and direction perpendicular to a straight line on which the sum of lengths of portions included in the claddings on the cross section perpendicular to the fiber longitudinal direction is the largest (the vertical direction in Fig. 6).

The optical fiber 4 is provided with core groups $44_1$, $44_2$, $44_{3A}$, $44_{3B}$, and $44_4$. The core group $44_1$ is composed

of four cores 41 covered by the cladding $42_1$. The core group $44_2$ is composed of four cores 41 covered by the cladding $42_2$. The core group $44_{3A}$ is composed of four cores 41 covered by the cladding $42_3$. The core group $44_{3B}$ is composed of the other four cores 41 covered by the cladding $42_3$. The core group $44_4$ is composed of four cores 41 covered by the cladding $42_4$.

The four cores 41 in each of the core groups $44_1$, $44_2$, $44_{3A}$, $44_{3B}$, and $44_4$ are arrayed on the same axis in the easy bend direction. As described above, each of the core groups $44_1$, $44_2$, $44_{3A}$, $44_{3B}$, and $44_4$ is composed of only the cores 41 of an identical structure.

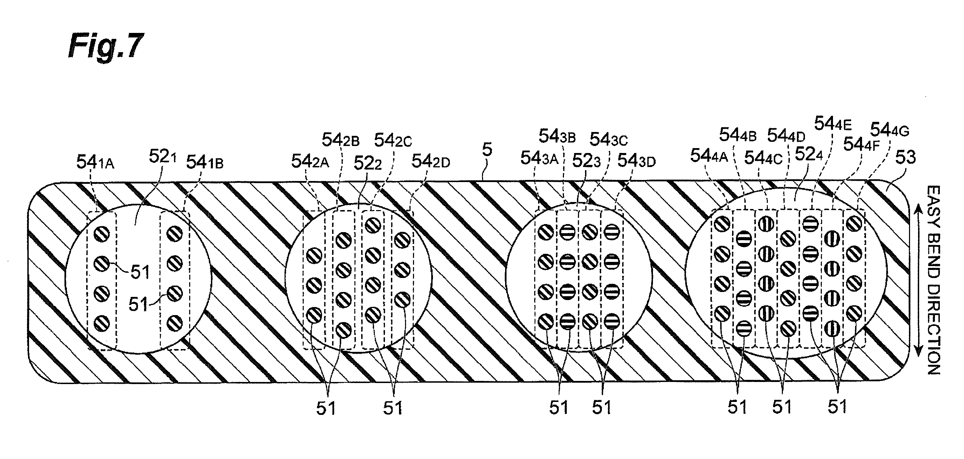

Fig. 7 is a cross-sectional view of optical fiber 5 according to the fifth embodiment. In the optical fiber 5, eight cores 51 are covered by a cladding (cladding element) $52_1$, fourteen cores 51 by a cladding (cladding element) $52_2$, sixteen cores 51 by a cladding (cladding element) $52_3$, twenty eight cores 51 by a cladding (cladding element) $52_4$, and these four claddings $52_1$-$52_4$ by a coating (resin) 53. The shape of the coating on the cross section of the optical fiber 5 is approximately a rectangular shape. The easy bend direction is a direction in which the coating diameter is the shortest and direction perpendicular to a straight line on which the sum of lengths of portions included in the claddings on the cross section perpendicular to the fiber longitudinal direction is the largest (the vertical direction in Fig. 7).

The optical fiber 5 is provided with core groups $54_{1A}$, $54_{1B}$, $54_{2A}$, $54_{2B}$, $54_{2C}$, $54_{2D}$, $54_{3A}$, $54_{3B}$, $54_{3C}$, $54_{3D}$, $54_{4A}$, $54_{4B}$, $54_{4C}$, $54_{4D}$, $54_{4E}$, $54_{4F}$, and $54_{4G}$.

The core group $54_{1A}$ is composed of four cores 51 covered by the cladding $52_1$. The core group $54_{1B}$ is composed of the other four cores 51 covered by the cladding $52_1$.

The core group $54_{2A}$ is composed of three cores 51 covered by the cladding $52_2$. The core group $54_{2B}$ is composed of other four cores 51 covered by the cladding $52_2$. The core group $54_{2C}$ is composed of other four cores 51 covered by the cladding $52_2$. The core group $54_{2D}$ is composed of the other three cores 51 covered by the cladding $52_2$.

The core group $54_{3A}$ is composed of four cores 51 covered by the cladding $52_3$. The core group $54_{3B}$ is composed of other four cores 51 covered by the cladding $52_3$. The core group $54_{3C}$ is composed of other four cores 51 covered by the cladding $52_3$. The core group $54_{3D}$ is composed of the other four cores 51 covered by the cladding $52_3$.

The core group $54_{4A}$ is composed of four cores 51 covered by the cladding $52_4$. The core group $54_{4B}$ is composed of other four cores 51 covered by the cladding $52_4$. The core group $54_{4C}$ is composed of other four cores 51 covered by the cladding $52_4$. The core group $54_{4D}$ is composed of other four cores 51 covered by cladding $52_4$. The core group $54_{4E}$ is composed of other four cores 51 covered by the cladding $52_4$. The core group $54_{4F}$ is composed of other four cores 51 covered by the cladding $52_4$. The core group $54_{4G}$ is composed of the other four cores 51 covered by cladding $52_4$.

The plurality of cores 51 included in each of the core groups $54_{1A}$ to $54_{1B}$, $54_{2A}$ to $54_{2D}$, $54_{3A}$ to $54_{3D}$, and $54_{4A}$ to $54_{4G}$ are arrayed on the same axis in the easy bend direction. Each of the core groups $54_{1A}$ to $54_{1B}$, $54_{2A}$ to $54_{2D}$, $54_{3A}$ to $54_{3D}$, and $54_{4A}$ to $54_{4G}$ is composed of only the cores 51 of an identical structure.

Concerning the core groups $54_{3A}$ to $54_{3D}$, the structures of the cores are different from each other between the core groups $54_{3A}$, $54_{3C}$ and the core groups $54_{3B}$, $54_{3D}$. Concerning the core groups $54_{4A}$ to $54_{4G}$, the structures of the cores are different from each other among the core groups $54_{4A}$, $54_{4D}$, $54_{4G}$, the core groups $54_{4B}$, $54_{4E}$, and the core groups $54_{4C}$, $54_{4F}$.

Each of these optical fibers 1 to 5 is easy to bend uniquely in the easy bend direction and in that case, the bending radius direction is approximately parallel to the array direction of the cores in the easy bend direction throughout the entire length, thereby readily realizing a state in which the core constellation in the easy bend direction is almost fixed. Therefore, by giving an appropriate bend to each of the optical fibers 1 to 5 (e.g., in the range of bending radius of 10 cm to 10 m), the equivalent effective refractive-index differences between cores in the core groups can be easily maintained above a certain level throughout the entire length.

Each optical fiber may include only one core group or a plurality of core groups. The optical fiber is preferably provided with a plurality of core groups because a larger number of cores can be arranged on the fiber cross section so as to achieve effective utilization. The optical fiber of each embodiment of the present invention is preferably provided with a plurality of core groups each composed of a plurality of cores arrayed on the same axis in the easy bend direction, at different positions in the direction perpendicular to the easy bend direction.

All the core groups included in the optical fiber may be covered by an integral cladding or by respective individual claddings.

The optical fiber is preferably one in which a plurality of cores included in each of the core groups have an identical structure. Because of this configuration, even if the optical fiber is bent on either side in the easy bend direction, there is no difference in the relation of equivalent effective refractive-index differences between cores with the bending radius, making no dependence of crosstalk on bending directions (or on which side the fiber is bent in the easy bend direction).

As in the case of the optical fibers shown in Figs. 3 to 6, it is preferable to provide a plurality of core groups each composed of a plurality of cores arrayed in the easy bend direction, at different positions in the width direction. It is preferable to provide a plurality of collections each consisting of a series of cores composed of adjacent cores, as combinations in which an acute angle of a line segment connecting centers of two adjacent cores, with respect to the easy bend direction on the cross section perpendicular to the fiber longitudinal axis is less than 30°.

As in the case of each core group in the optical fibers shown in Figs. 3 to 6, or in the case of the core groups $54_{1A}$, $54_{1B}$ in the cladding $52_1$ and the core groups $54_{3A}$, $54_{3C}$ and $54_{3B}$, $54_{3D}$ in the cladding $52_3$ in Fig. 7, the space between cores in the same structure existing on the same axis perpendicular to the easy bend direction between two core groups is preferably larger than the space in the easy bend direction between adjacent cores in the same core group. Namely, it is preferable that a minimum value of center-center distance between two cores in a combination (third core combination) satisfying a third angle condition that an angle of a line segment (third intercore line segment) connecting centers of two cores of an identical structure, with respect to the easy bend direction on the cross section perpendicular to the fiber longitudinal axis is a right angle or an acute angle of not less than 30°, be larger than a maximum value of center-center distance between two adjacent cores in a combination (first core combination) satisfying a first angle condition that an acute angle of a line segment (first intercore line segment) connecting centers of two adjacent core of an identical structure, with respect to the easy bend direction on the cross section perpendicular to the fiber longitudinal axis is less than 30°. Since in the optical fibers of the present invention the phase matching becomes significant between cores of an identical structure existing on the same axis perpendicular to the easy bend direction, the intercore crosstalk between core groups can be reduced by decreasing an overlap of electric field distributions of cores between core groups.

As in the case of the core groups $54_{2A}$ to $54_{2D}$ in the cladding $52_2$ in Fig. 7, it is more preferable that between two adjacent core groups no cores exist at positions parallel to the direction perpendicular to the easy bend direction. This constellation can prevent phase matching between adjacent core groups. The cores may exist at positions parallel to the direction perpendicular to the easy bend direction, between sufficiently-separated core groups (with a small overlap of electric field distributions) which are not adjacent core groups.

As in the case of the core groups $54_{3A}$ to $54_{3D}$ in the cladding $52_3$ in Fig. 7, it is preferable that structures of cores between two adjacent core groups be different from each other. Namely, structures of two adjacent cores are preferably different in a combination (second core combination) satisfying a second angle condition that an angle of a line segment (second intercore line segment) connecting centers of two adjacent cores, with respect to the easy bend direction on the cross section perpendicular to the fiber longitudinal axis is a right angle or an acute angle of not less than 30°. Since the bending direction of the optical fiber of the present invention is limited to the easy bend direction, the phase matching due to the bend and twist can be suppressed between cores of different structures at positions parallel to the direction perpendicular to the easy bend direction between adjacent core groups, so as to reduce the crosstalk.

As in the case of the core groups $54_{4A}$ to $54_{4G}$ in the cladding $52_4$ in Fig. 7, the optical fiber may have a configuration wherein three or more types of heterogeneous cores are used to make the core structures in the respective core groups different between two adjacent core groups and to locate no cores at positions parallel to the width direction between adjacent core groups, whereby the space between homogeneous cores existing at positions parallel to the width can be made very large, so as to decrease the intercore crosstalk between different core groups.

That the crosstalk can be reduced in the optical fiber means nothing other than that the core pitch can be made shorter (or the core density can be made higher) than in the conventional optical fibers while keeping the crosstalk fixed.

In addition to the above embodiments, various forms as described below can also be applicable as embodiments of optical fibers according to the present invention.

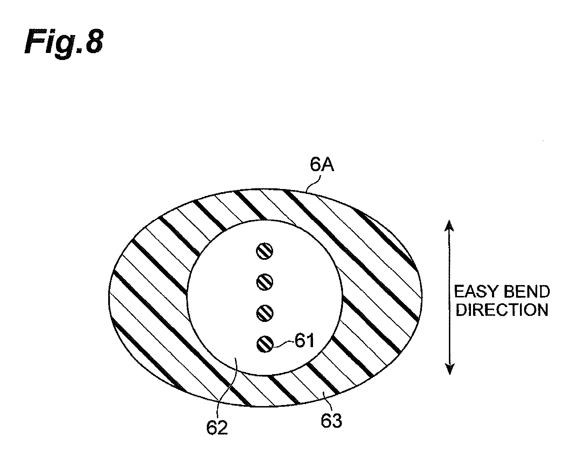

Fig. 8 is a cross-sectional view of optical fiber 6A according to a modification example. In the optical fiber 6A, four cores 61 having an identical structure are covered by a cladding 62 and the cladding 62 is covered by a coating (resin) 63. The cross-sectional shape of the cladding 62 is circular and the cross-sectional shape of the coating 63 is approximately elliptical. The cross-sectional shape of the coating 63 is not of circular symmetry and has rotational symmetry of order one or two but not rotational symmetry of order three or more. The easy bend direction is defined as a direction in which the coating diameter is the shortest. The four cores 61 are arrayed in the easy bend direction.

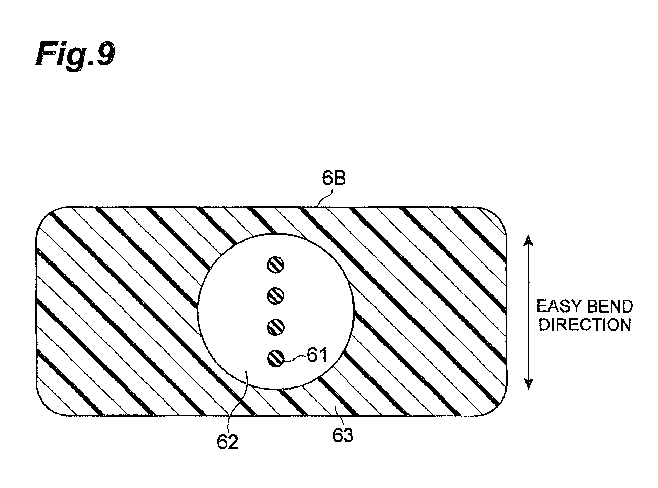

Fig. 9 is a cross-sectional view of optical fiber 6B according to a modification example. In the optical fiber 6B, four cores 61 having an identical structure are covered by a cladding 62 and the cladding 62 is covered by a coating (resin) 63. The cross-sectional shape of the cladding 62 is circular and the cross-sectional shape of the coating 63 approximately rectangular. The cross-sectional shape of the coating 63 is not of circular symmetry and has rotational symmetry of order one or two but not rotational symmetry of order three or more. The easy bend direction is defined as a direction in which the coating diameter is the shortest. The four cores 61 are arrayed in the easy bend direction.

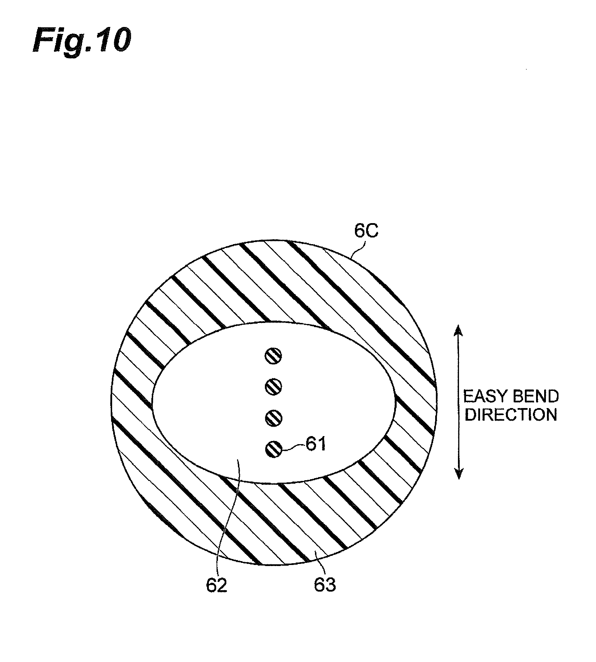

Fig. 10 is a cross-sectional view of optical fiber 6C according to a modification example. In the optical fiber 6C, four cores 61 having an identical structure are covered by a cladding 62 and the cladding 62 is covered by a coating (resin) 63. The cross-sectional shape of the cladding 62 is approximately elliptical and the cross-sectional shape of the coating 63 circular. The cross-sectional shape of the cladding 62 is not of circular symmetry and has rotational symmetry of order one or two but not rotational symmetry of order three or more. The easy bend direction is defined as a direction in which the cladding diameter is the shortest. The four cores 61 are arrayed in the easy bend direction.

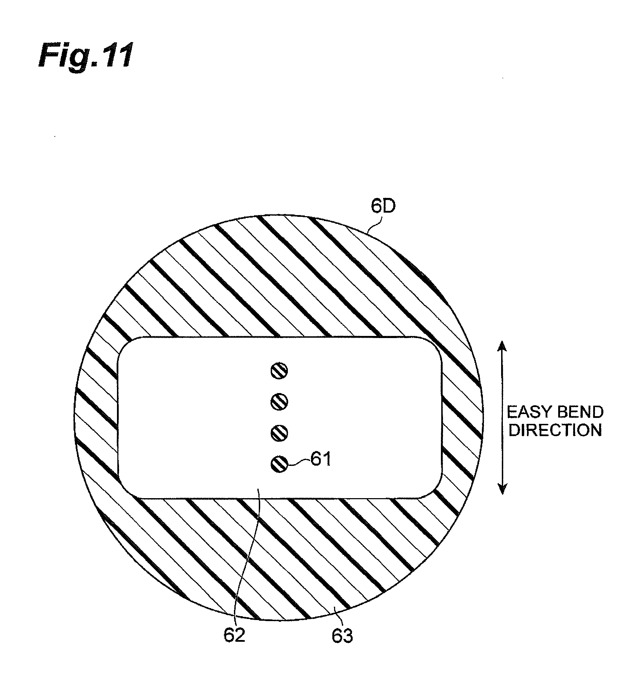

Fig. 11 is a cross-sectional view of optical fiber 6D according to a modification example. In the optical fiber 6D, four cores 61 having an identical structure are covered by a cladding 62 and the cladding 62 is covered by a coating (resin) 63. The cross-sectional shape of the cladding 62 is approximately rectangular and the cross-sectional shape of the coating 63 circular. The cross-sectional shape of the cladding 62 is not of circular symmetry and has rotational symmetry of order one or two but not rotational symmetry of order three or more. The easy bend direction is defined as a direction in which the cladding diameter is the shortest. The four cores 61 are arrayed in the easy bend direction.

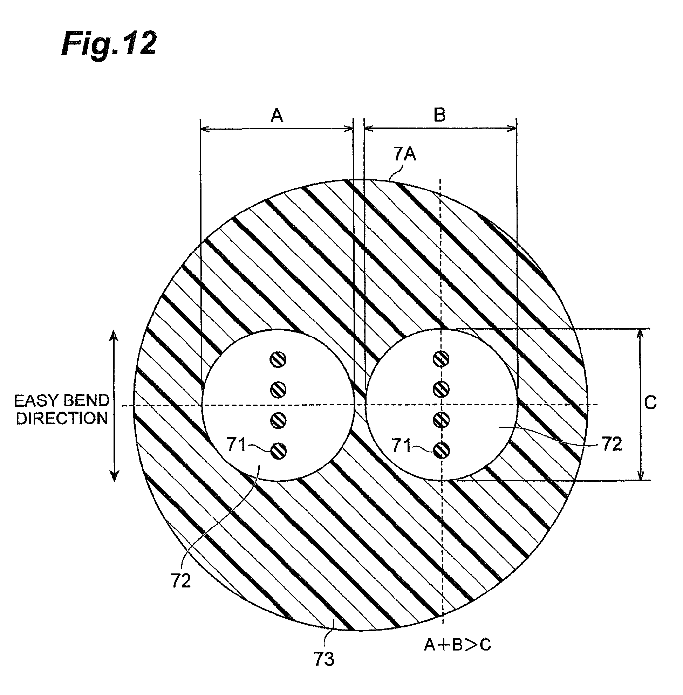

Fig. 12 is a cross-sectional view of optical fiber 7A according to a modification example. In the optical fiber 7A, four cores 71 having an identical structure are covered by each of claddings (cladding elements) 72, the cross-sectional shape of each of the two claddings 72 is circular, and these claddings 72 are integrally covered by a coating (resin) 73. The arrangement of the two claddings 72 is not of circular symmetry and has rotational symmetry of order one or two but not rotational symmetry of order three or more. The easy bend direction is defined as a direction perpendicular to a straight line on which the sum of lengths of portions included in the claddings is the largest, on the cross section perpendicular to the fiber longitudinal direction. In the easy bend direction a plurality of cores 71 are arrayed in each cladding 72.

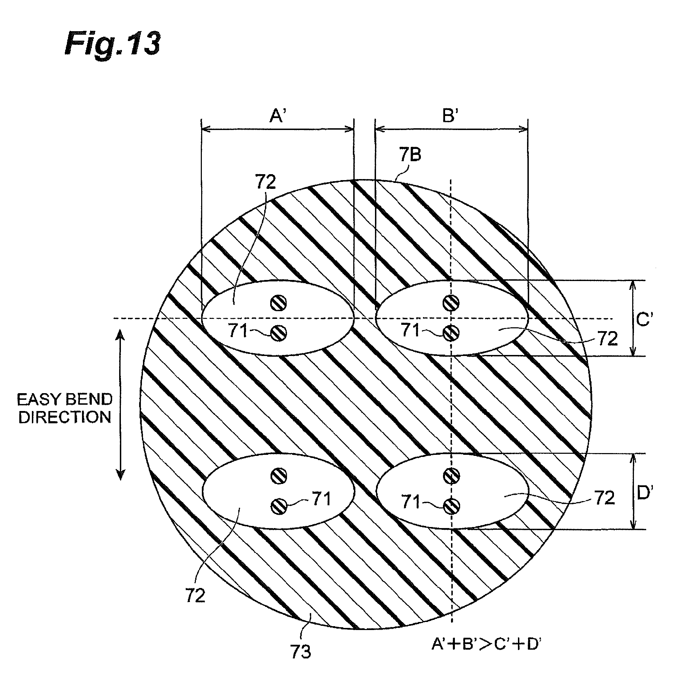

Fig. 13 is a cross-sectional view of optical fiber 7B according to a modification example. In the optical fiber 7B, two cores 71 having an identical structure are covered by each of claddings (cladding elements) 72, the cross-sectional shape of each of the four claddings 72 is approximately elliptical, and these four claddings 72 are integrally covered by a coating (resin) 73. The cross-sectional shape of the claddings 72 is not of circular symmetry and has rotational symmetry of order one or two but not rotational symmetry of order three or more. The easy bend direction is defined as a direction perpendicular to a straight line on which the sum of lengths of portions included in the claddings is the largest, on the cross section perpendicular to the fiber longitudinal direction. In the easy bend direction a plurality of cores 71 are arrayed in each cladding 72.

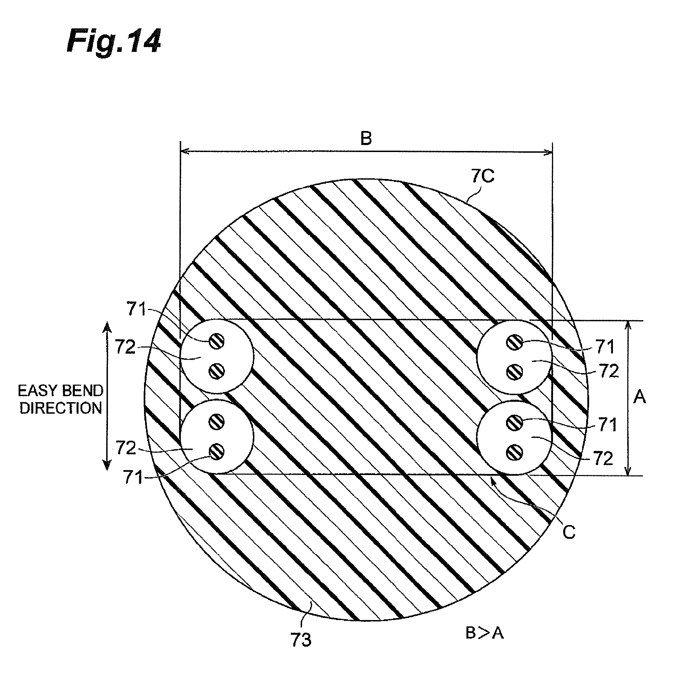

Fig. 14 is a cross-sectional view of optical fiber 7C according to a modification example. In the optical fiber 7C, two cores 71 having an identical structure are covered by each of claddings (cladding elements) 72, the cross-sectional shape of each of the four claddings 72 is circular, and these four claddings 72 are integrally covered by a coating (resin) 73. The arrangement of the claddings 72 is not of circular symmetry and has rotational symmetry of order one or two but not rotational symmetry of order three or more. The easy bend direction is defined as a direction in which the width of a region inside a closed curve C enclosing all the claddings so as to minimize the circumferential length is the smallest, on the cross section perpendicular to the fiber longitudinal direction. In the easy bend direction a plurality of cores 71 are arrayed in each cladding 72.

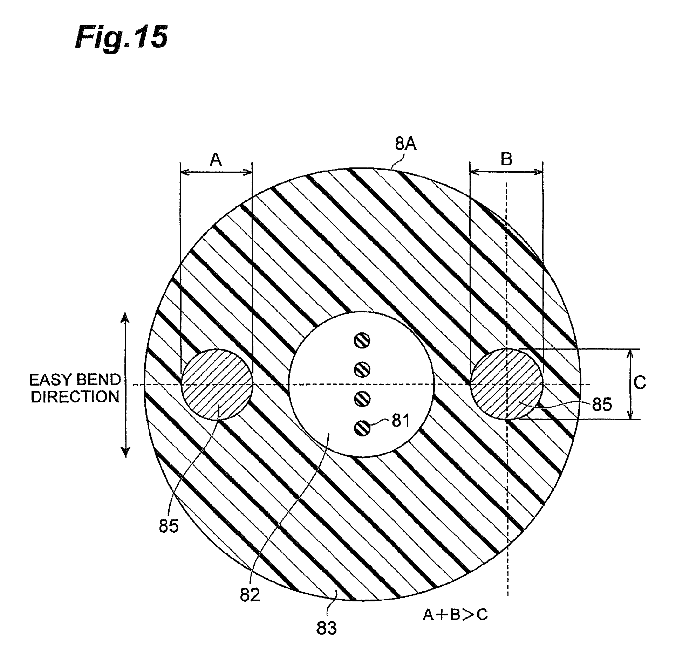

Fig. 15 is a cross-sectional view of optical fiber 8A according to a modification example. In the optical fiber 8A, four cores 81 having an identical structure are covered by a cladding 82 and the cladding 82, together with two bend direction controllers 85, is covered by a coating (resin) 83. Each of the two bend direction controllers 85 extends along the fiber longitudinal direction in the coating 83 and has the higher Young's modulus than the coating 83. The easy bend direction is defined as a direction perpendicular to a straight line on which the sum of lengths of portions included in the bend direction controllers 85 is the largest, on the cross section perpendicular to the fiber longitudinal direction. In the easy bend direction the four cores 81 are arrayed. It is noted that the cladding 82 and the coating 83 may be made of an identical resin material. In this case, the resin region of the identical resin material where the cladding 82 and coating 83 are integrated serves as a cladding having a lower refractive index that the cores 81. In the case of the optical fibers of the cross-sectional shape allowing us to specify the easy bend direction, like the optical fibers according to the above-described respective embodiments without the bend direction controllers, the cladding(s) and coating may be comprised of an identical resin material.

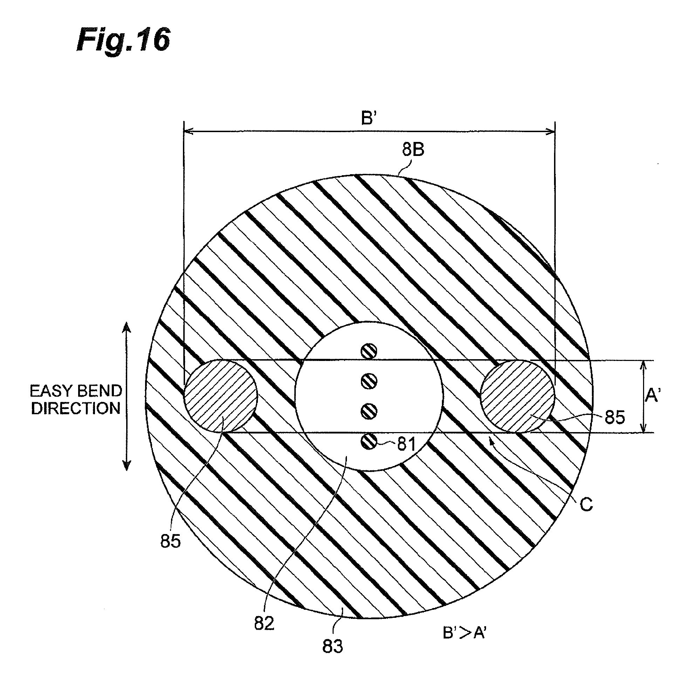

Fig. 16 is a cross-sectional view of optical fiber 8B according to a modification example. In the optical fiber 8B, four cores 81 having an identical structure are covered by a cladding 82 and the cladding 82, together with two bend direction controllers 85, is covered by a coating (resin) 83. Each of the two bend direction controllers 85 extends along the fiber longitudinal direction in the coating 83 and has the higher Young's modulus than the coating 83. The easy bend direction is defined as a direction in which the width of a region inside a closed curve C enclosing all the bend direction controllers 85 so as to minimize the circumferential length is the smallest, on the cross section perpendicular to the fiber longitudinal direction. In the easy bend direction the four cores 81 are arrayed.

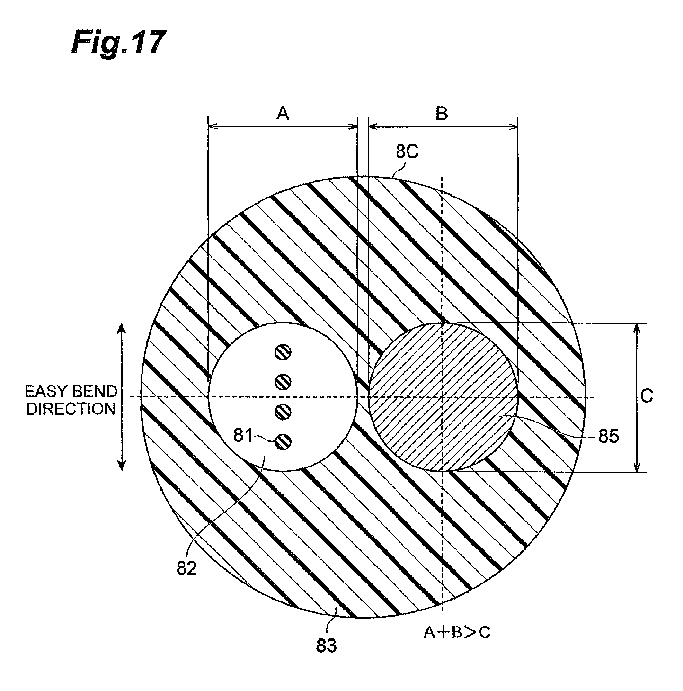

Fig. 17 is a cross-sectional view of optical fiber 8C according to a modification example. In the optical fiber 8C, four cores 81 having an identical structure are covered by a cladding 82 and the cladding 82, together with a bend direction controller 85, is covered by a coating (resin) 83. The bend direction controller 85 extends along the fiber longitudinal direction in the coating 83 and has the Young's modulus equal to that of the coating 83. The easy bend direction is defined as a direction perpendicular to a straight line on which the sum of lengths of portions included in the bend direction controller 85 and the cladding 82 is the largest, on the cross section perpendicular to the fiber longitudinal direction. In the easy bend direction the four cores 81 are arrayed.

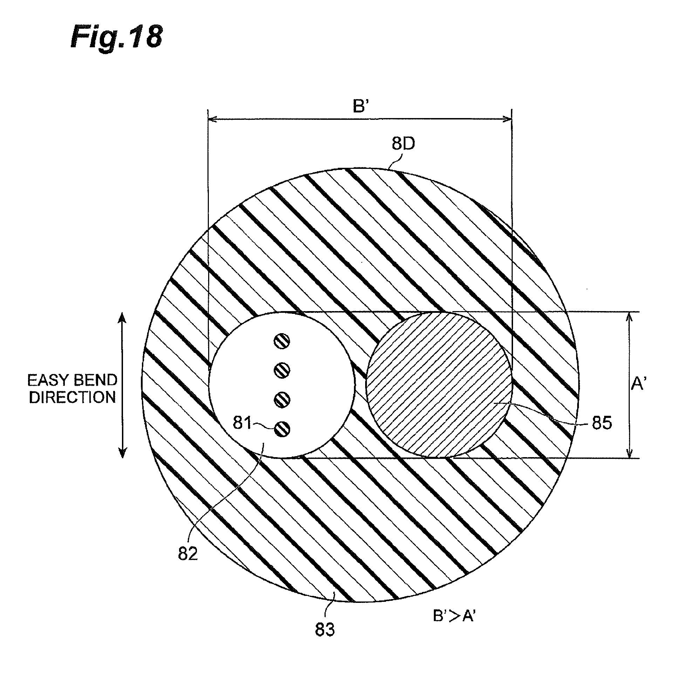

Fig. 18 is a cross-sectional view of optical fiber 8D according to a modification example. In the optical fiber 8D, four cores 81 having an identical structure are covered by a cladding 82 and the cladding 82, together with one bend direction controller 85, is covered by a coating (resin) 83. The bend direction controller 85 extends along the fiber longitudinal direction in the coating 83 and has the Young's modulus equal to that of the coating 83. The easy bend direction is defined as a direction in which the width of a region inside a closed curve C enclosing all of the bend direction controller 85 and the cladding 82 so as to minimize the circumferential length is the smallest, on the cross section perpendicular to the fiber longitudinal direction. In the easy bend direction the four cores 81 are arrayed.

The coating diameter in the direction perpendicular to the easy bend direction where the coating diameter is the shortest, on the cross section perpendicular to the fiber longitudinal direction, is not less than 1.2 times, more preferably not less than 1.5 times, and still more preferably not less than 2 times the coating diameter in the easy bend direction. The coating diameter in the direction perpendicular to the easy bend direction where the cladding diameter is the shortest is not less than 1.2 times, more preferably not less than 1.5 times, and still more preferably not less than 2 times the coating diameter in the easy bend direction. The sum of lengths on the straight line where the sum of lengths of portions included in the claddings is the largest is not less than 1.2 times, more preferably not less than 1.5 times, and still more preferably not less than 2 times a maximum value of the sum of lengths of portions included in the claddings on a straight line perpendicular to the aforementioned straight line. A maximum value of the width of the region inside the closed curve enclosing all the claddings so as to minimize the circumferential length is not less than 1.2 times, more preferably not less than 1.5 times, and still more preferably not less than 2 times a minimum value of the width of the region inside the closed curve. The sum of lengths on the straight line where the sum of lengths of portions included in the bend direction controllers is the largest is not less than 1.2 times, more preferably not less than 1.5 times, and still more preferably not less than 2 times a maximum value of the sum of lengths of portions included in the bend direction controllers on the straight line perpendicular to the aforementioned straight line. The maximum value of the width of the region inside the closed curve enclosing all the bend direction controllers so as to minimize the circumferential length is not less than 1.2 times, more preferably not less than 1.5 times, and still more preferably not less than 2 times the minimum value of the width of the region inside the closed curve. The sum of lengths on the straight line where the sum of lengths of portions included in the bend direction controller and the cladding is the largest is not less than 1.2 times, more preferably not less than 1.5 times, and still more preferably not less than 2 times a maximum value of the sum of lengths of portions included in the bend direction controller and the cladding on a straight line perpendicular to the aforementioned straight line. The maximum value of the width of the region inside the closed curve enclosing all of the bend direction controller and the cladding so as to minimize the circumferential length is not less than 1.2 times, more preferably not less than 1.5 times, and still more preferably not less than 2 times the minimum value of the width of the region inside the closed curve. By adopting these, the optical fibers of the embodiments of the present invention become easy to bend more stably in the easy bend direction as the bending radius direction.

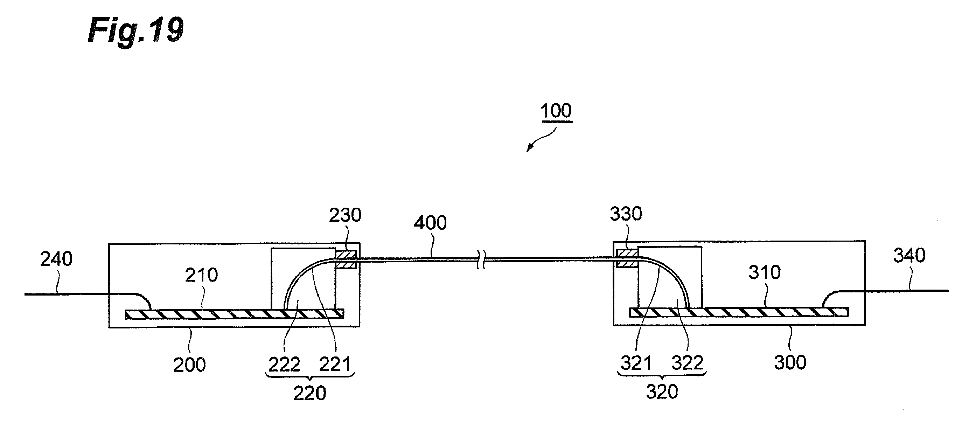

Now, let us consider a transmission link (Fig. 19) realizing an optical transceiver by a silicon photonics chip. In the transmission link 100 shown in Fig. 19, an optical transceiver 200 and an optical transceiver 300 can perform bidirectional optical communication through an optical fiber 400. In the optical transceiver 200, an electric signal incoming through an electric signal line 240 is converted into an optical signal by a silicon photonics chip (optoelectronic component) 210 and the optical signal is sent out through an optical waveguide 220 and a connection jig 230 onto the optical fiber 400. In the optical transceiver 300, the optical signal incoming through the optical fiber 400 is guided through a connection jig 330 and an optical waveguide 320 into a silicon photonics chip (optoelectronic component) 310 to be converted into an electric signal, and the electric signal is sent out onto an electric signal line 340. It is also possible to perform signal transmission in the direction opposite to the foregoing direction. In the middle of the optical fiber 400, there may be a spliced portion between optical fibers by means of a connector, fusion splicing, or butting of end faces. An optical module in which the silicon photonics chip 210 and the optical waveguide 220 are integrated may be applied to the optical transceiver 200. Similarly, an optical module in which the optical transceiver 300 and the optical waveguide 320 are integrated may be applied to the optical transceiver 300.

In each optical transceiver, the silicon photonics chip, optical waveguide, and connection jig are housed in a housing. As shown in Fig. 19, the optical transceiver housings can be realized in a limited height and compact size by preparing the optical waveguide 220 wherein a plurality of cores 221 are covered by a cladding 222, preparing the optical waveguide 320 wherein a plurality of cores 321 are covered by a cladding 322, connecting the silicon photonics chips and the optical waveguides to each other, bending the direction of propagation of light in a small radius of curvature by about 90° by the optical waveguides, and connecting the optical waveguides and the optical fiber through the connection jigs. Since this configuration allows the traveling direction of light to be bent without giving a bend in a small radius of curvature to the optical fiber, it is feasible to reduce possibilities of rupture of the optical fiber due to bending stress.

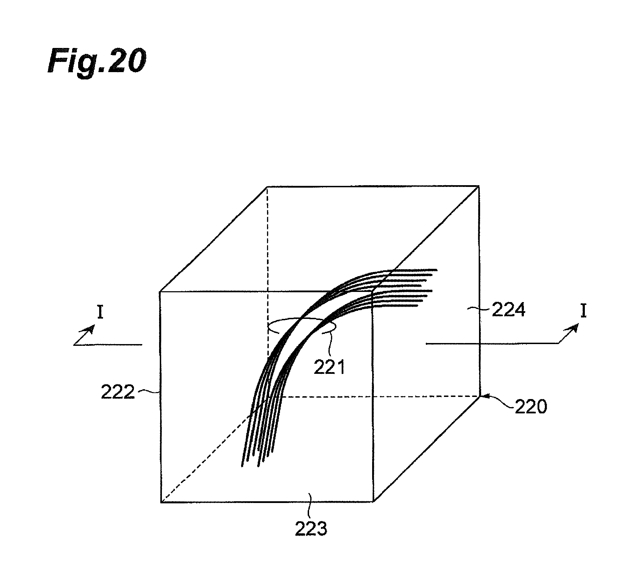

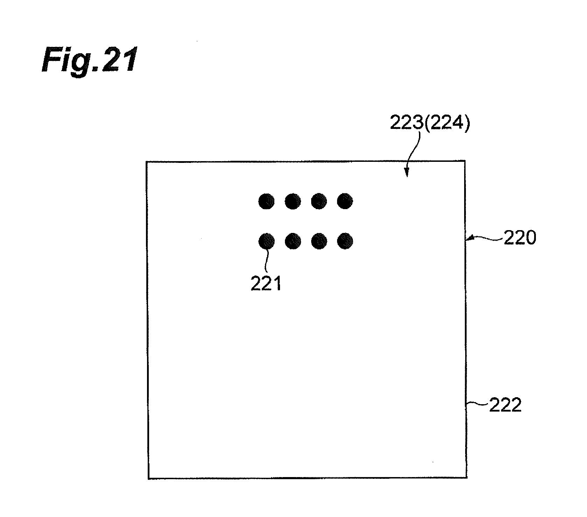

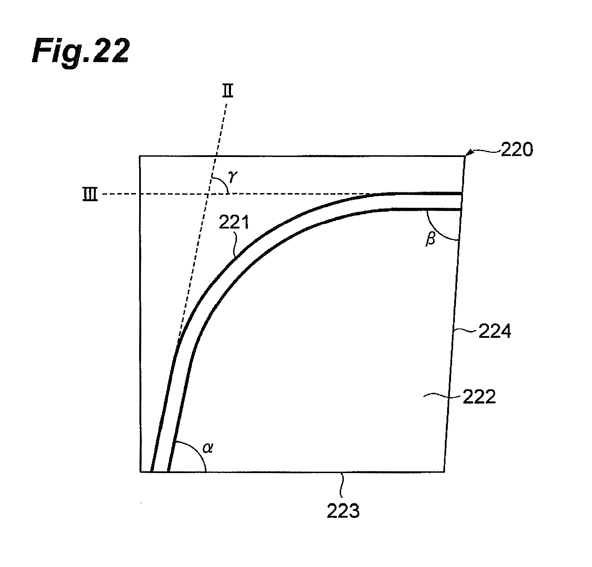

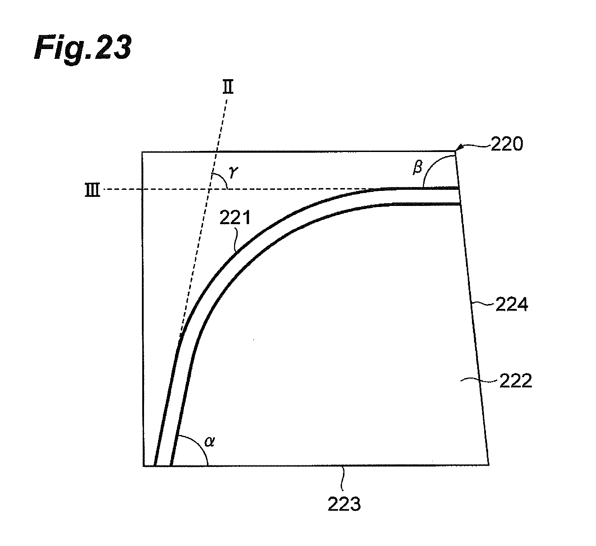

Fig. 20 is a perspective view showing a configuration of the optical waveguide 220. Fig. 21 is a drawing showing one end face (first plane 223 or second plane 224) of the optical waveguide 220. Figs. 22 and 23 are two examples of cross-sectional views (cross-sections along the line I-I of Fig. 20) of the optical waveguide 220 in different structures. The below will describe the optical waveguide 220 and the same also applies to the optical waveguide 320. The optical waveguide 220 has a plurality of cores 221 of an identical structure, a cladding 222 covering these cores 221, and a resin covering the cladding 222. The refractive index of the cladding 222 is lower than that of the cores 221. The optical waveguide 220 can guide light through each core 221 between a first plane (first light entrance/exit face) 223 and a second plane (second light entrance/exit face) 224.

Each core 221 has a curved portion in a small radius of curvature. Because of this curved portion, an angle y (see Fig. 22) between the central axis of the core 221 in the first plane 223 and the central axes II and III of the core 221 in the second plane 224 is a supplementary angle and is preferably in the range of 58° to 90° and more preferably in the range of 74° to 90°. Concerning angles $\alpha$ and $\beta$ (see Fig. 22) of the core 221 to the first plane 223 and to the second plane 224, acute angles are preferably not less than 74° or right angles, and the acute angles are more preferably in the range of 80° to 84°. The radius of curvature of the central axis of the core 221 in the curved portion is preferably not more than 15 mm, more preferably not more than 10 mm, still more preferably not more than 7.5 mm, yet more preferably not more than 5 mm, and furthermore preferably not more than 4 mm.

A preferred configuration for reduction of crosstalk between two adjacent cores is such that in the curved portion there is one or more combinations (first core combinations) satisfying a first angle condition that an acute angle of a line segment (first intercore line segment) connecting centers of two adjacent cores, with respect to the bending radius direction of the cores on the cross section perpendicular to the central axes of the cores is less than 30°, and in every one of the combinations satisfying the first angle condition, structures of two adjacent cores are identical.

In the curved portion and in the foregoing combinations satisfying the first angle condition that the acute angle of the line segment connecting the centers of two adjacent cores, with respect to the bending radius direction of the cores on the cross section perpendicular to the central axes of the cores is less than 30°, the acute angle of the line segment connecting the centers of the two cores, with respect to the bending radius direction of the cores is more preferably less than 15° and still more preferably less than 5°, and, furthermore preferably, the line segment connecting the centers of the two cores is parallel to the bending radius direction of the cores.

In the curved portion and in a combination (second core combination) satisfying a second angle condition that an angle of a line segment (second intercore line segment) connecting centers of two adjacent cores, with respect to the bending radius direction of the cores on the cross section perpendicular to the central axes of the cores is a right angle or an acute angle of not less than 30°, structures of two adjacent cores are preferably different.

In the curved portion, a minimum value of center-to-center distance between two cores in a combination (third core combination) satisfying a third angle condition that an angle of a line segment (third intercore line segment) connecting centers of two cores of an identical structure, with respect to the bending radius direction of the cores on the cross section perpendicular to the central axes of the cores is preferably larger than a maximum value of center-to-center distance between two adjacent cores in the combination (first core combination) satisfying the first angle condition that the acute angle of the line segment (first intercore line segment) connecting the centers of the two adjacent cores of an identical structure, with respect to the bending radius direction of the cores on the cross section perpendicular to the central axes of the cores is less than 30°.

The number of cores and the core constellation do not have to be limited to those in the example of the drawings. For allowing use of an ultraviolet curing adhesive in bonding the optical waveguide of the present invention to the silicon photonics chip and the optical fiber, the optical waveguide of the present invention is preferably one that transmits ultraviolet light 10% or more.

In the optical fibers and optical waveguides according to the embodiments of the present invention, the cores and claddings are preferably glass or resin and more preferably pure silica glass or silica glass containing an additive. The cores may be glass and the claddings resin. A preferred configuration to further reduce the crosstalk and decrease the core pitch is such that the optical fiber is provided with a trench layer having the lower refractive index than the cladding, between the core and the cladding. The trench layer is preferably realized as a solid layer of glass or resin having the lower refractive index than the cladding, and the trench layer is preferably realized as a layer in which a plurality of holes are arranged around the core, thereby to decrease the refractive index on average in the circumferential direction so as to be lower than that of the cladding. Another preferred configuration is such that the optical fiber is provided with an inside cladding layer having the refractive index lower than that of the core and higher than that of the trench layer, between the core and the trench layer. The inside cladding layer is preferably glass or resin. In the optical fiber of the present invention, the bend direction controller is preferably glass, metal, or carbon fiber. The claddings are preferably integrally covered by resin. One cladding is preferably provided with a metal coating or a carbon coating, separately from the resin coating.

The below will describe the effect of crosstalk reduction in the optical fibers according to the embodiments of the present invention or the effect of decrease of the core pitch on the basis of predetermined crosstalk.

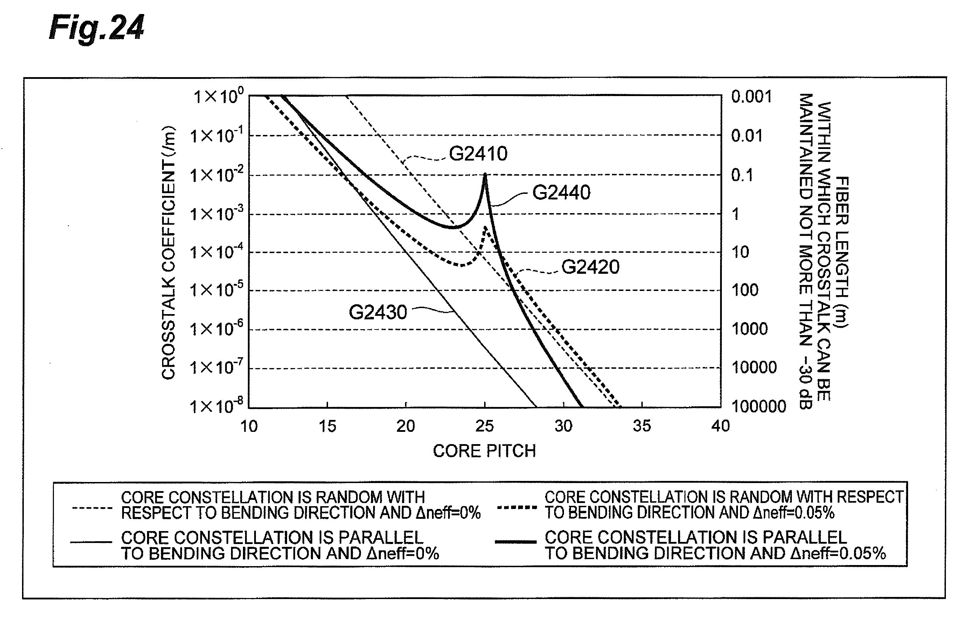

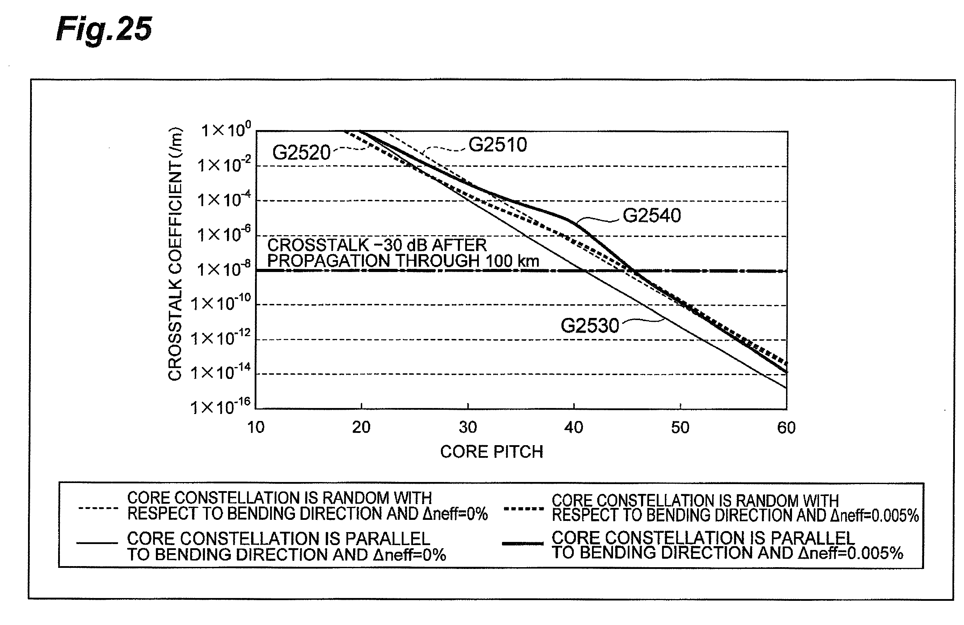

Figs. 24 and 25 show the results of calculation of the core pitch and crosstalk coefficient (crosstalk increase rate per unit length), for the optical fibers with step-index cores wherein the relative refractive-index difference $\Delta$ between cores and cladding is around 0.42% and the core diameter is around 8.4 $\mu$m.

Fig. 24 is graphs showing relationships between the core pitch and the crosstalk coefficient at the wavelength of 1.31 $\mu$m in the fiber bending radius of 5 cm. In Fig. 24, graph G2410 shows the relationship between the core pitch and the crosstalk coefficient in a situation where the core constellation is random with respect to the bending direction and the cores are homogeneous (a relative refractive-index difference between effective refractive indices of cores $\Delta$neff=0%) (which is an optical fiber of a comparative example); graph G2420 the relationship in a situation where the core constellation is random with respect to the bending direction and the cores are heterogeneous (∆neff=0.05%) (which is an optical fiber of a comparative example); G2440 the relationship in a situation where the core constellation is parallel to the bending direction and the cores are heterogeneous (∆neff=0.05%) (which is an optical fiber of a comparative example); graph G2430 the relationship in a situation where the core constellation is parallel to the bending direction and the cores are homogeneous (∆neff=0%) (which is an optical fiber of an embodiment).

It is seen from Fig. 24 that, for keeping the crosstalk not more than -30 dB in the optical fiber 1 m or more long, the optical fiber of the embodiment (where the core constellation is parallel to the bending direction and ∆neff=0%) has the lowest crosstalk while realizing the smallest core pitch. For example, for achieving the crosstalk -30 dB or less in the optical fiber 100 m long, the optical fibers of the comparative examples need to have at least the core pitch of not less than 27 μm, whereas the optical fiber of the embodiment can have the core pitch of not less than 22 μm, so as to achieve significant reduction of the core pitch. In consideration of application to short-haul communication in lengths from several cm to several ten m or so, there is a good chance that the major part of the optical fiber is bent in this small radius.

Fig. 25 is graphs showing relationships between the core pitch and the crosstalk coefficient at the wavelength of 1.55 μm in the fiber bending radius of 80 cm. In Fig. 25, graph G2510 shows the relationship between the core pitch and the crosstalk coefficient in a situation where the core constellation is random with respect to the bending direction and the cores are homogeneous (a relative refractive-index difference between effective refractive indices of cores ∆neff=0%) (which is an optical fiber of a comparative example); graph G2520 the relationship in a situation where the core constellation is random with respect to the bending direction and the cores are heterogeneous (∆neff=0.005%) (which is an optical fiber of a comparative example); G2540 the relationship in a situation where the core constellation is parallel to the bending direction and the cores are heterogeneous (∆neff=0.005%) (which is an optical fiber of a comparative example); graph G2530 the relationship in a situation where the core constellation is parallel to the bending direction and the cores are homogeneous (∆neff=0%) (which is an optical fiber of an embodiment).

It is seen from Fig. 25 that, for keeping the crosstalk not more than -30 dB in the optical fiber transmission link 100 km or more long, the optical fiber of the embodiment (where the core constellation is parallel to the bending direction and ∆neff=0%) has the lowest crosstalk while realizing the smallest core pitch. For achieving the crosstalk -30 dB or less in the optical fiber 100 km long, the optical fibers of the comparative examples need to have at least the core pitch of not less than 44.5 μm, whereas the optical fiber of the embodiment can have the core pitch of not less than 41 μm, so as to achieve significant reduction of the core pitch.

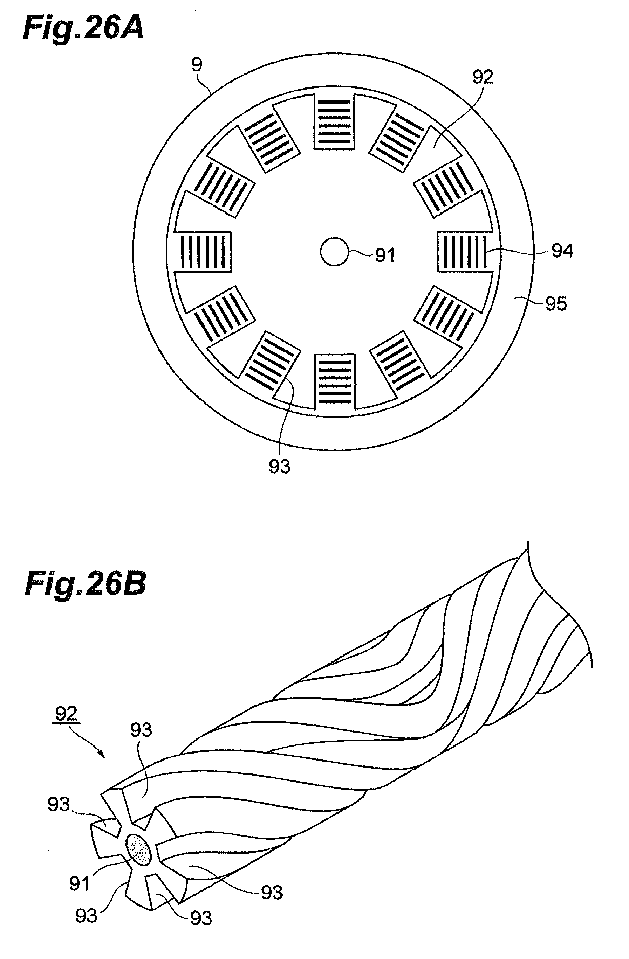

Fig. 26A is a cross-sectional view of an optical fiber cable 9 according to an embodiment, and Fig. 26B is a perspective view of a spacer 92 constituting a part of the optical fiber cable 9. The optical fiber cable 9 is provided with a tension member 91 provided along the central axis and a grooved spacer 92 around the tension member 91, slots 93 are provided on an outer peripheral surface of the grooved spacer 92, optical fibers 94 are set in the slots 93, and the whole of these is covered by a cable coating resin 95. In the optical fiber cable 9, the optical fibers 94 are accommodated in the slots 93 of the grooved spacer 92. Each of the optical fibers 94 has a ribbon shape, and a direction orthogonal to a width direction of the ribbon is an easy bend direction. The optical fibers 94 are laminated in the slots 93 along the easy bend directions thereof. In the present embodiment, the slots 93 of the grooved spacer 92 are arranged in a spiral manner around the tension member 91. The optical fibers 94 are bent at a predetermined radius of curvature because they are arranged in the spiral slots 93 of the grooved spacer 92. The optical fibers 94 of the present embodiment have a structure insulated from the influence of crosstalk even though they are bent along the easy bend directions. Therefore, in the structure that the optical fibers 94 of this embodiment are applied to the optical fiber cable 9, it is possible to increase a core density as compared with the case that a standard multi-core optical fiber is applied. Furthermore, the slots 93 may be formed on the surface of the grooved spacer 92 in a spiral manner such that a twist direction is fixed in only one direction, or, may be formed on the surface of the grooved spacer 92 in a spiral manner of SZ-twist such that a twist direction alternatively reverses. A spacer applied to a cable structure is not limited to a multi-slotted spacer as shown in Fig. 26B, a spacer aggregation in which a plurality of single spacers each having only one slot are aggregated in a spiral manner, can be applied as such a spacer. As a cable structure, an optical fiber unit having a structure in which a plurality of optical fibers are integrated while easy bend directions of the plurality of optical fibers are uniformed can be applied.

The optical fiber cable 9 internally has the optical fibers of the foregoing embodiment as optical fibers 94 set in the slots 93 and the optical fibers are held in the cable in a state in which they are bent in an appropriate bending radius throughout the entire length. It is considered that in the optical fiber cable 9 the optical fibers are bent naturally in the easy bend direction as bending direction, but it is more preferable that they be held so that the bending direction thereof is defined in the easy bend direction. By adopting a structure in which the slots 93 are twisted around the cable longitudinal axis, the optical fibers in the cable can be held in a helical shape with respect to a central axis along the cable longitudinal axis, whereby the optical fibers can be continuously bent in an appropriate bending radius.

With consideration of ease of manufacture in cable formation, the appropriate bending radius is preferably not less than 10 cm. When the distance between cores adjacent at the nearest distance in the easy bend direction is denoted by Dmin, the relative refractive-index difference between equivalent effective refractive indices of the adjacent cores, $\Delta_{eq}$, is represented by Expression (3) below. When the effective refractive-index difference between cores is constant in the fiber longitudinal direction, the effective refractive-index difference between cores is preferably not less than 0.005% in terms of relative refractive-index difference (cf. Non-Patent Literature 4 ("M. Koshiba et al., "Heterogeneous multi-core fibers: proposal and design principle," IEICE Electron. Express, vol. 6, no. 2, pp. 98-103, Jan. 2009")). From these, the bending radius is preferably one satisfying Expression (4) below. It is noted herein that the units of Dmin and Rb are the same.

[Math 3]

$$\Delta_{eq}[\%]=100\frac{\left(1+\dfrac{D_{min}}{R_b}\right)^2-1}{2\left(1+\dfrac{D_{min}}{R_b}\right)^2}\qquad\cdots(3)$$

[Math 4]

$$R_b\leq\frac{D_{min}}{1-\sqrt{0.9999}}=2.0\times10^5 D_{min}\qquad\cdots(4)$$

For example, when Dmin is assumed to be 15 $\mu$m, the appropriate bending radius is not more than 3 m. When Dmin is assumed to be 20 $\mu$m, the appropriate bending radius is not more than 4 m. When Dmin is assumed to be 25 $\mu$m, the appropriate bending radius is not more than 4 m. When Dmin is assumed to be 30 $\mu$m, the appropriate bending radius is not more than 6 m. When Dmin is assumed to be 35 $\mu$m, the appropriate bending radius is not more than 7 m. When Dmin is assumed to be 40 $\mu$m, the appropriate bending radius is not more than 8 m. When Dmin is assumed to be 45 $\mu$m, the appropriate bending radius is not more than 9 m. When Dmin is assumed to be 50 $\mu$m, the appropriate bending radius is not more than 10 m.

Reference Signs List

1-8 ... optical fiber, 9 ... optical fiber cable, 11 ... core, 12 ... cladding, 13 ... coating (resin), $14_1$-$14_2$ ... core group, 21 ... core, 22 ... cladding, 23 ...coating (resin), $24_1$-$24_2$ ... core group, 31 ... core, 32 ... cladding, 33 ...coating (resin), $34_1$-$34_2$ ... core group, 41 ... core, $42_1$-$42_4$ ... cladding, 43 ... coating (resin), $44_1$, $44_2$, $44_{3A}$, $44_{3B}$, $44_4$ ... core group, 51 ... core, $52_1$-$52_4$ ... cladding, 53 ...coating (resin), $54_{1A}$-$54_{1B}$, $54_{2A}$-$54_{2D}$, $54_{3A}$-$54_{3D}$, $54_{4A}$-$54_{4G}$ ... core group, 61 ... core, 62 ... cladding, 63 ...coating (resin), 71 ... core, 72 ... cladding, 73 ... resin, 81 ... core, 82 ... cladding, 83 ... resin, 85 ... bend direction controller, 91 ... tension member, 92 ... grooved spacer, 93 ... slot, 94 ... optical fiber, 95 ... cable coating resin, 100 ...transmission link, 200 ... optical transceiver, 210 ... silicon photonics chip, 220 ... optical waveguide, 221 ... core, 222 ... cladding, 230 ...connection jig, 240 ... electric signal line, 300 ... optical transceiver, 310 ... silicon photonics chip, 320 ... optical waveguide, 321 ... core, 322 ... cladding, 330 ...connection jig, 340 ... electric signal line, 400 ... optical fiber.

**Claims**

**1.**  An optical waveguide comprising: a plurality of cores; a cladding covering each of the plurality of cores; a first surface on which one end surfaces of the plurality of cores are arranged; and a second surface on which the other end surfaces of the plurality of cores are arranged, each of the plurality of cores extending along a predetermined axis direction from the first surface to the second surface,
wherein the plurality of cores include a first core combination of two adjacent cores,
in at least a section of an entire length of the optical waveguide, an easy bend direction of the optical waveguide or a core bend direction is a specific direction in a cross section orthogonal to the predetermined axis direction, and
the two adjacent cores belonging to the first core combination have the same core structure and are arranged so that a first angle between a first intercore line segment connecting centers of said two adjacent cores and the specific direction becomes less than 30 degrees.

2. The optical waveguide according to claim 1, wherein the first angle is less than five degrees.

3. The optical waveguide according to claim 1 or 2, wherein the plurality of cores include a second core combination of two adjacent cores, and
the two adjacent cores belonging to the second core combination have different core structures and are arranged so that a second angle between a second intercore line segment connecting centers of said two adjacent cores and the specific direction becomes a right angle or an acute angle of not less than 30 degrees.

4. The optical waveguide according to any one of claims 1 to 3, wherein the plurality of cores include a third core combination of two adjacent cores,
the two adjacent cores belonging to the third core combination have different core structures and are arranged so that a third angle between a third intercore line segment connecting centers of said two adjacent cores and the specific direction becomes a right angle or an acute angle of not less than 30 degrees, and
a minimum length of the third intercore line segment in the third core combination is longer than a maximum length of the first intercore line segment in the first core combination.

5. The optical waveguide according to any one of claims 1 to 4, wherein the optical waveguide is an optical fiber with an arrangement structure of the plurality of cores provided within a cross section thereof.

6. The optical waveguide according to claim 5, wherein an outer periphery of the optical fiber is covered with a coating and the optical waveguide has at least one structure of first to fourth structures as a structure allowing a bending resistance,
a first structure being defined by the cladding having a thickness along the specific direction which is less than a thickness of the cladding along a direction orthogonal to the specific direction,
a second structure being defined by the coating having a thickness or an outer periphery size in its length along the specific direction which is less than a thickness or an outer periphery size in its length along a direction orthogonal to the specific direction,
a third structure being defined by the cladding constituted by a plurality of cladding elements each outer periphery of which is covered by the coating and which are arranged along a direction approximately orthogonal to the specific direction while being covered by the coating, and
a fourth structure being defined by the coating covering an additional rigid member together with the cladding while the cladding and the additional rigid member are arranged in the coating along a direction approximately orthogonal to the specific direction.

7. The optical waveguide according to claim 6, wherein the coating is composed of a resin.

8. An optical fiber cable internally comprising the optical fiber as the optical waveguide as set forth in any one of claims 5 to 7, wherein the optical fiber is held within a cable while being added with a bend in the specific direction.

9. The optical waveguide according to any one of claims 1 to 4, wherein each of the plurality of cores has a bend portion bent at a radius of curvature of 15 mm or less along the specific direction, a first straight portion positioned on or near the fist surface, and a second straight portion positioned on or near the second surface, and
wherein a fourth angle between the first straight portion and the second straight portion is not less than 58 degrees.

10. The optical waveguide according to claim 9, wherein the radius of curvature of the bend portion is any one of 10 mm or less, 7.5 mm, and 5 mm.

11. The optical waveguide according to claim 9 or 10, wherein an angle at a side in which a center of the radius of curvature in the bend portion, our of angles between the first straight portion of each of the plurality of cores and the first surface, is not less than 74 degrees but 90 degrees or less.

12. The optical waveguide according to claim 9 or 10, wherein an angle at a side in which a center of the radius of curvature in the bend portion, our of angles between the second straight portion of each of the plurality of cores and the second surface, is not less than 74 degrees but 90 degrees or less.

13. An optical module in which the optical waveguide as set forth in any one of claims 1 to 4 and 9 to 12 and an optoelectronic component with optical input/output terminals, wherein one end surfaces of the plurality of cores, arranged on the first surface of the optical waveguide, are optically coupled to the optical input/output terminals of the optoelectronic component.

## Fig.1A

## Fig.1B

*Fig.2A*

*Fig.2B*

CENTER OF BEND

Rb

CORE m

CORE n

θ

r

EFFECTIVE REFRACTIVE INDEX

EQUIVALENT EFFECTIVE REFRACTIVE INDEX $n_{eqeff,n}$ OF CORE n

EFFECTIVE REFRACTIVE INDEX $n_{eff,n}$ OF CORE n

(EQUIVALENT) EFFECTIVE REFRACTIVE INDEX $n_{eqeff,m}$ OF CORE m

0

π/2

π

θ

m n

m

n

m

n

$n_{eqeff,m}$

$n_{eqeff,n}$

n m

*Fig.2C*

*Fig.2D*

*Fig.2E*

*Fig.2F*

EP 2 924 480 A1

*Fig.3*

# Fig.4

# Fig.5

# Fig.6

EASY BEND DIRECTION

EP 2 924 480 A1

*Fig.7*

EP 2 924 480 A1

*Fig.8*

6A

61

62    63

EASY BEND
DIRECTION

EP 2 924 480 A1

*Fig.9*

6B

61

62      63

EASY BEND
DIRECTION

24

# Fig.10

6C

EASY BEND
DIRECTION

61

62      63

# Fig.11

EP 2 924 480 A1

*Fig.12*

EASY BEND
DIRECTION

A+B>C

27

## Fig.13

EASY BEND
DIRECTION

A'+B'>C'+D'

## Fig.14

## Fig.15

# Fig.16

EASY BEND
DIRECTION

B'

8B

85

A'

C

81

85

82

83

B'>A'

## Fig.17

*Fig.18*

EP 2 924 480 A1

**Fig.19**

Fig.20

Fig.21

223(224)

221

220

222

*Fig.22*

*Fig.23*

# Fig.24

EP 2 924 480 A1

*Fig.25*

*Fig.26A*

*Fig.26B*

## INTERNATIONAL SEARCH REPORT

| International application No. |
| --- |
| PCT/JP2013/081309 |

A.  CLASSIFICATION OF SUBJECT MATTER
*G02B6/04*(2006.01)i, *G02B6/02*(2006.01)i, *G02B6/42*(2006.01)i, *G02B6/44*
(2006.01)i

According to International Patent Classification (IPC) or to both national classification and IPC

B.  FIELDS SEARCHED

Minimum documentation searched (classification system followed by classification symbols)
G02B6/04, G02B6/02, G02B6/42, G02B6/44, G02B6/122

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho  1971-2013   Toroku Jitsuyo Shinan Koho   1994-2013

Electronic data base consulted during the international search (name of data base and, where practicable, search terms used)
JSTPlus(JDreamIII), JST7580(JDreamIII)

C.  DOCUMENTS CONSIDERED TO BE RELEVANT

| Category* | Citation of document, with indication, where appropriate, of the relevant passages | Relevant to claim No. |
| --- | --- | --- |
| X<br>A | WO 2010/082656 A1 (Sumitomo Electric Industries, Ltd.), 22 July 2010 (22.07.2010), paragraphs [0026], [0027]; fig. 1, 2 & US 2011/0052129 A1    & EP 2388629 A1 & CN 102282488 A | 1-3,5,7-13<br>4,6 |
| X<br>A | Yoshinari AWAJI, Jun SAKAGUCHI, Naoya WADA, Kunimasa SAITO, "Measurement and simulation of bending characteristics of homo- and hetero-geneous seven core fibers", IEICE Technical Report, 10 November 2011 (10.11.2011), vol.111, no.298, pages 21 to 24 | 1,2,4,5,7-13<br>3,6 |

|☒|  Further documents are listed in the continuation of Box C. |☐|  See patent family annex. |

| \* | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 05 December, 2013 (05.12.13) | 17 December, 2013 (17.12.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

42

EP 2 924 480 A1

**INTERNATIONAL SEARCH REPORT**

International application No.

PCT/JP2013/081309

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 2004-279620 A  (Sony Corp.),<br>07 October 2004 (07.10.2004),<br>paragraphs [0023], [0026]; fig. 1, 3<br>(Family: none) | 1,2,9-13<br>3-8 |

Form PCT/ISA/210 (continuation of second sheet) (July 2009)

43

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012064579 A

### Non-patent literature cited in the description

- *Proc. of SPIE,* 2012, vol. 8284, 8240I-1, I-8
- **K. SAITO et al.** Homogeneous and Heterogeneous Multi-core fibers. *IEEE Summer Topicals 2012, TuC4.4,* 2012
- **T. HAYASHI et al.** Crosstalk variation of multi-core fibre due to fibre bend. *ECOC2010, We.8.F.6*
- **M. KOSHIBA et al.** Heterogeneous multi-core fibers: proposal and design principle. *IEICE Electron. Express,* January 2009, vol. 6 (2), 98-103